# EUROPEAN PATENT SPECIFICATION

(11) **EP 3 092 186 B1**
(45) Date of publication and mention of the grant of the patent: **28.03.2018**
(21) Application number: 14828355.9
(22) Date of filing: 29.12.2014
(51) Int. Cl.: B65D 85/804, A47J 31/06

(54) **FORM-RETAINING PAD FOR USE IN A COFFEE MAKER**
FORMSTABILES PAD ZUR VERWENDUNG IN EINER KAFFEEMASCHINE
TAMPON À MÉMOIRE DE FORME POUR L'UTILISATION DANS UNE MACHINE À CAFÉ

(30) Priority: 08.01.2014 NL 2012062
(43) Date of publication of application: 16.11.2016
(73) Proprietor: Koninklijke Douwe Egberts B.V., 3532 AD Utrecht (NL)
(72) Inventor: VAN DER VEEN, Jos Christiaan, 3532 AD Utrecht (NL)
(74) Representative: V.O.
(86) International application number: PCT/NL2014/050912
(87) International publication number: WO 2015/105409

(56) References cited:
- EP-A1- 2 594 170
- WO-A1-2006/043096
- US-A1- 2012 051 672

## Description

The invention relates to a form-retaining pad for use in a coffee-maker for preparing 1 or 2 cups of beverage, provided with an envelope with an inner space which is filled with a beverage preparation product for preparing the beverage, wherein the beverage preparation product comprises a product to be extracted with a fluid and/or possibly a product soluble in a fluid, wherein the envelope is formed by at least a first disc-shaped sheet and a second disc-shaped sheet which are interconnected adjacent their longitudinal edges, wherein the interconnected parts of the first sheet and the second sheet form a sealing seam and wherein the first sheet and the second sheet each form a filter which can pass the fluid and which forms a barrier to the beverage preparation product, wherein, in use, with the coffee-maker a fluid such as water is supplied, under pressure, to the pad so that the fluid is pressed through the pad for obtaining a beverage which thereupon leaves the pad, and wherein each sheet comprises at least one layer.

The invention further relates to a method for manufacturing such a pad.

The invention furthermore relates to a system provided with a coffee-maker and such a pad, wherein the coffee-maker is provided with a holder for receiving the pad, a cover for closing off the holder, and fluid means for generating a fluid flow under pressure, wherein the holder is provided with at least one beverage outflow opening and the cover is provided with at least one fluid inflow opening which are in fluid communication with the fluid means for supplying the fluid flow to the fluid inflow openings so that the fluid is supplied under pressure to the first sheet of the pad so that the fluid is pressed through the pad for the preparation of the beverage in the pad, wherein the beverage leaves the pad via the second sheet to proceed to leave the holder via the at least one beverage outflow opening. Also, the invention relates to the use of such a pad and a method for preparing a beverage with the pad. Such a pad, such a system and such a use and method are known per se from EP 0 904 717 A1. In EP 0 904 717 A1 the beverage preparation product consists of ground coffee. Furthermore, the first sheet and the second sheet are each made of filtering paper. The invention contemplates the provision of an improved pad.

WO-A-2006/043096 A1 discloses a pad for preparing a beverage comprising a body defining a storage volume having an inlet for entry of water and an outlet for outflow of beverage. The storage volume contains a water-soluble composition or a combination or mixture of water-soluble compositions for forming a beverage. The outlet comprises filtering means and the storage volume further contains a dispersion plate associated with the outlet for creating a non-vertical flow of water, in use, within the storage volume wherein the dispersion plate is freely suspended within the storage volume.

According to the invention, it holds that at least one of the first sheet and the second sheet is of form-retaining design, made of at least one base compound comprising meltable polymers and preferably fibers and/or filaments of the same, and at least one enforcement compound comprising at least non-meltable polymers of the group of abaca, banana plant, flax, hemp, lyocell, tencel, kenaf, nettles, ramie, bamboo, bowstring, indian hemp, jute, cotton, coir, sisal, agave and preferably fibers and/or filaments.

Herein, for ease of understanding, the above "first sheet and/or the second sheet" are referred as "at least one sheet" or "the sheet" if not otherwise mentioned or obvious from the respective before mentioned passage(s).

The invention is based on the insight that the known pad, when it has been placed in a holder of the coffee-maker by a user, may sometimes be slightly deformed. This can happen because the known pad is of flexible and supple design and, for instance, may be taken from its package in slightly deformed condition. If the known pad has been placed in the holder, a user should take care that the pad in the holder has its original shape so that the second sheet of the pad extends over a bottom of the holder up to the upstanding sidewall of the holder. If he doesn't, the risk of bypass is increased. Bypass means that the fluid being supplied under pressure to the first sheet of the pad will flow in part around the pad to a beverage outflow opening which is provided in a bottom of the holder on which the pad rests. All this has as a consequence that not the complete amount of fluid being supplied to the first sheet of the pad will flow to the beverage outflow opening of the holder via the pad. A consequence is that the beverage which is received in, for example, a cup, is diluted with the fluid. The invention contemplates facilitating the use of a pad. As according to the invention the first and/or the second sheet are of form-retaining design, the pad can be placed in the holder without relevant deformation which increases the risk of bypass. Moreover, it appears that owing to at least one sheet being form-retaining, a distribution of the beverage preparation product in the envelope of the pad varies little from one pad to another. This in turn has as an advantage that upon forcing the fluid through the pad a beverage is obtained whose properties are well-defined in advance. In fact, if the distribution of the beverage preparation product were not uniform, but, for instance, at a particular position inside of the pad a relatively thin layer were formed between the first sheet and the second sheet, then at this position a reduced flow resistance to the fluid will occur. As the fluid being forced through the pad will choose the path of least resistance, the fluid will preferentially flow through the pad precisely in this area, with the result that fewer ingredients of the beverage preparation product will be incorporated in the finished beverage than if the thickness of the layer of the beverage preparation product extending between the first and second sheet were more uniform. Also, it appears in many variants of the form-retaining pad according to the invention that an anti-drip effect occurs. That is, directly after use the pad can be taken from a machine while the chance that drops fall off the pad has been reduced.

Providing the above pad comprising least one of the first sheet and the second sheet of form-retaining design and made of at least one base compound comprising meltable polymers and preferably fibers and/or filaments of the same, and at least one enforcement compound comprising at least non-meltable fibers and/or filaments of the group of abaca, banana plant, flax, hemp, kenaf, nettles, ramie, bamboo, bowstring, indian hemp, jute, cotton, coir, sisal, agave, lyocell, tencel, results in a pad manufacturable in a cost effective and reliable form-retaining way. It has to be mentioned that beside the materials of the enforcement compound mentioned above also materials with a simiar abilities can be used.

It is especially an advantage of the inventive pad, that it is possible to form the respectve sheets by a thermo-forming process, wherein the base coumponds in a melted form interconnects with the non-meltable fibers and/or filaments, and wherein the temperature for the forming process can be defined within a very broad range. The same advantage applies with regard to the beverage preparation process of the pad, as form-retaining ability can be ensured over a broad range of beverage preparation temperatures. Besides, the inventive pad can be compostable by use of the above materials. In general the non-meltable enforcement compound provides the strenght of the form-retaining sheet due to its enforcing mechanical abilities.

"Non-meltable" within the context of the invention is preferably defined as the ability of the enforcement compound and it fibers or filaments respectively to withstand high temperatures without reaching a melting point. Preferably and especially with regard to other fibres than the before mentioned fibres and/or filaments of the enforcement compound it is defined as the ability to withstand temperatures up to 140° Celsius, preferably up to 200° Celsius and more preferably temperatures up to 400° Celsius without any significant change of the consistency.

"Meltable" within the context of the invention is preferably defined as at least one base compound and it fibers or filaments respectively having the ability of undergoing a significant change of consistency when being subjected to temperatures below 400° Celsius, preferably 200° Celsius and more preferably below 140° Celsius. It is possible to provide multiple base compounds wherein at least one is meltable as defined above, e.g. above 130° Celsius and wherein at least another is non-meltable or meltable at higher temperatures e.g. above 170° Celsius.

Preferably it holds that the first sheet forms a filter which can pass a fluid for preparing the beverage from outside the pad to the inner space and which forms a barrier to the product to be extracted and that the second sheet forms a filter which can pass a beverage formed in the inner space of the pad and which forms a barrier to the product to be extracted, wherein, in use, with the coffee-maker a fluid such as water is supplied under pressure to the first sheet of the pad so that the fluid is pressed via the first sheet through the pad for obtaining a beverage which thereupon leaves the pad via the second sheet.

Preferably it holds that the at least one sheet comprises at least one layer comprising a preferably homogeneous mixture of the at least one base compound and the at least one enforcement compound. This mixture can e.g. be prepared during the manufacturing process of the sheet material and especially during a wet laying or nonwoven process. It is also possible that the at least one sheet comprises at least one first layer comprising at least one base compound without an enforcement compound and at least one second layer comprising at least one enforcement compound. With other words multiple layers can be provided, each layer comprising at least one base compound and/or one enforcement compound, wherein also multiple different base and enforcement compounds can be used in on or the multiple layers. Preferably it holds that the at least one second layer also comprises at least one base compound. Preferably at least two of the multiple layers are connected with each other, wherein it preferably holds that the at least one second layer is applied and preferably bonded to the at least one first layer or vice versa. Especially in this regard it preferably holds that the at least one second layer is applied and preferably bonded to the outside of the first layer, facing away from the inner space of the pad. It also preferably holds that the at least one sheet is comprising multiple of the first layers and/or of the second layers, wherein preferably at least one first layer is arranged between at least two second layers and/or vice versa.

The enforcement compound can be provide as a woven material, woven with itself, another enforcement compound or at least one of the base compound, or a nonwoven material and also mixed with another enforcement compound or at least one of the base compound. The above also applies for the base compound.

Preferably, it holds that at least one sheet also remains form-retaining when a fluid such as the beverage is flowing through it, while the fluid can have a temperature of at most 80 degrees Celsius, more particularly at most 90 degrees Celsius, and preferably at most 99 degrees Celsius. This has as a consequence that also after use, hence after the pad has been subject to flow-through of fluid that will generally have a high temperature, when, for example, coffee or tea is being prepared, it will still be form-retaining. If the at least one sheet after use is still form-retaining, the pad can more easily be removed from the holder by the user in that the user has a better grip of the pad. Preferably, it holds, to this end, that the at least one sheet is made of a thermoplastic material. A thermoplastic material is a material that becomes more plastic as the temperature rises. Preferably, it holds then that the first sheet also remains form-retaining when it comes into contact with a fluid having a temperature of 80 degrees Celsius, more particularly of 90 degrees Celsius and preferably of 99 degrees Celsius.

As mentioned above it preferably holds that the at least one base compound comprises a thermoplastic material and also it preferably it holds that the base compound comprises a plastic, wherein preferably the plastic is present at least partly in the form of fibers and/or filaments. With regard to said plastic it further preferably holds that the plastic is present at least partly in the form of cellulose fibers and/or cellulose filaments which are provided with a plastic coating. The plastic can preferably consist of plastic polymers or comprises plastic polymers, wherein preferably the plastic polymers comprise PE, PET, PETP, coPET, LLDPE, CPP, PLA and/or PP.

Preferably it holds that the base compound comprises plastic for at least 30 percent by weight, preferably for at least 40 percent by weight.

Preferably it holds that the at least one sheet consists of said plastic for at least 50-70 percent by weight; and preferably consists of said plastic for at least 60-70 percent by weight, while in particular the plastic consists of plastic fibers and/or plastic filaments.

Preferably it holds that the at least one sheet consists of said plastic for 50 to <100 percent by weight; more preferably consists of said plastic for 60 to <100 percent by weight, still more preferably consists of a plastic for 70 to <100 percent by weight, still more preferably of at least 80 percent by weight, still more preferably of at least 90 percent by weight, in particular consists of said plastic for 75-95 percent by weight, and more particularly consists of said plastic for 80-95 percent by weight, while in particular the plastic consists of plastic fibers and/or plastic filaments.

In general it preferably holds that the at least one sheet is made of a porous material. Preferably in this regard it holds that the at least one sheet is made of a nonwoven material. Preferably said nonwoven material comprises said above plastic and/or said above plastic and at least one enforcement compound. With other words it preferably holds that the nonwoven material comprises a mixture of at least one base and/or enforcement compounds. The base and/or the enforcement compounds can be woven with base compounds and/or enforcement compounds. It can also be provided that at least one compound is woven optionally also comprising at least the other compound wherein additionally a compound is applied as at least a further layer.

It is also possible to provide the enforcement compound at least partly in fibers and/or filaments which are provided with a plastic coating. Also it is possible that the base compound also comprises cellulose fibers and/or cellulose filaments and/or comprises plastic polymers preferably chosen from the group PE, PET, PETP, coPET, LLDPE, CPP, PLA and/or PP, wherein said plastic polymers are non-meltable up to a temperature of 170°Celsius, preferably 200° Celsius and more preferably 250° Celsius. Also it preferably holds that the base compound comprises of a paper material.

In particular, it holds that the at least one sheet is made of a nonwoven material, wherein in order for the at least one sheet to be form-retaining, it preferably holds here in particular that the nonwoven material consists of a plastic for at least 50-70 percent by weight, while in particular the plastic consists of plastic fibers and/or plastic filaments. To put it differently, in order for the at least one sheet to be form-retaining, it holds here on balance, in particular, that the nonwoven material consists of a plastic for at least 50 percent by weight, while in particular the plastic consists of plastic fibers and/or plastic filaments. More particularly, it holds here that the nonwoven material consists of a plastic for at least 60 percent by weight, while in particular the plastic consists of plastic fibers and/or plastic filaments. More preferably, it holds that the nonwoven material consists of a plastic for at least 70 percent by weight, preferably for at least 80 percent by weight, and more preferably for at least 90 percent by weight. The nonwoven material can here be present in a form of fibers and/or in a form of filaments.

An advantage of a nonwoven material is that it can form a good fluid sealing with the holder when the nonwoven material is moist as a result of the supply of the fluid. When the nonwoven material is made of a plastic at least for a part, it may typically have been made form-retaining through a heat treatment. The plastic can be provded as said plastic mentioned above. Preferably the plastic can consist, for example, of polymers which comprise PE, PET, PETP, coPET, LLDPE, CPP, PLA and/or PP. The plastic is present in the nonwoven material in the form of, for instance, plastic fibers and/or plastic filaments.

Preferably, it holds that the at least one sheet comprises a foil and/or consists of a foil which is provided with a multiplicity of inflow and/or outflow openings and is made of said plastic.

Preferably, it holds that that the at least one sheet is made more form-retaining by means of calendering.

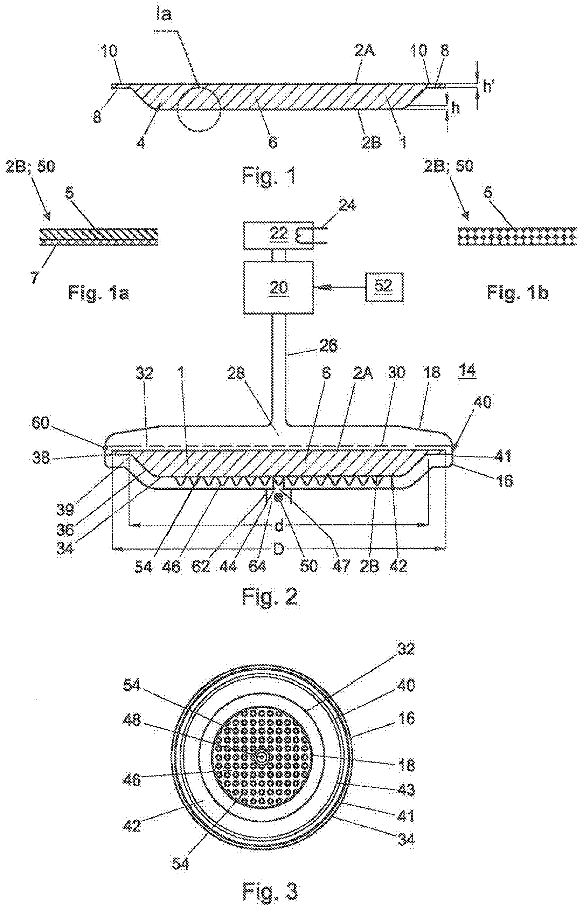

Preferably, it holds that the at least one sheet is in the range of 15- -200 g/m2, preferably in the range of 70-150 g/m2 and more preferably in the range of 90-120 g/m2 and further preferably it holds that the thickness of the at least one sheet is in the range of 50-500 µm, preferably in the range of 100-500 µm, more preferably in the range of 110-350 µm and still more preferably in the range of 150-300 µm. Preferably this holds for the at least one sheet being a bottom sheet of a pad and preferably the second sheet of the embodiment of the pad shown further below in Fig. 1.

As mentioned, it preferably holds that the at least one base compound and/or the at least one sheet is furthermore provided with cellulose fibers and/or cellulose filaments. Still more in particular, it consists of the above-mentioned plastic fibers and/or plastic filaments and the cellulose fibers and/or cellulose filaments. In general it preferably holds that the base compound also comprises cellulose fibers and/or cellulose filaments and/or comprises plastic polymers preferably chosen from the group PE, PET, PETP, coPET, LLDPE, CPP, PLA and/or PP, wherein the plastic polymers are non-meltable up to a temperature of 170° Celsius, preferably 200° Celsius and more preferably 250° Celsius. The sheet material and especially the nonwoven material can thus consist of a combination of plastic fibers and/or plastic filaments and/or cellulose fibers and/or cellulose filaments. Also, it may be that the cellulose fibers are covered with a plastic coating. An advantage of the embodiments mentioned is that the at least one sheet has the optical properties of filtering paper more, while yet being form-retaining. This last may be so because, measured in percent by weight, more plastic or plastic fibers and/or plastic filaments are present than cellulose fibers and/or cellulose filaments, while, in particular, the nonwoven material has undergone a heat treatment to increase form retention.

Preferably, it holds that the base compound comprises Polylactic Acid (PLA) fibers, wherein preferably it comprises PLA 60-120 g/m2, preferably PLA 70-100 g/m2, more preferably PLA 90 or 100 g/m2. Especially in this regard it holds that the thickness of the at least one sheet is 100-600 µm. In particular it preferably holds that the at least one sheet is comprising <100% Polylactic Acid (PLA) fibers and possibly derivatives, and for the rest at least the enforcement compound or at least the enforcement compound and at least one base compound, so that the second sheet is at least substantially completely biodegradable after use. Also it preferably holds that the at least one sheet consists for x% of Polylactic Acid (PLA) fibers and for (1-x)% of paper and/or at least one enforcement compound, with x being in the range of 50-80, preferably in the range of 60-70, more preferably approximately equal to 65, while in particular the PLA fibers have a melting point of 105-165 degrees Celsius. Especially with regard to the PLA it preferably holds that the fibers have a length of 2-90 mm and/or further preferably that the fibers are 0.6-60 denier.

Preferably it holds that the at least one base compound comprises polyester fiber, in particular a generic brand material and preferably Smash™ material. In particular it preferably holds that the at least one sheet comprises a generic brand material and especially Smash™ 150 g/m2.

Further it preferably holds that the thickness of the at least one sheet is 250-450 µm, preferably 300-400 µm, more preferably 350 µm. Preferably this holds for the at least one sheet being a top sheet of a pad and preferably the first sheet of the embodiment of the pad shown further below in Fig. 1.

In this application, form retention can for instance be defined as follows. The form retention of the at least one sheet according to a test is expressed in a force, measured during the test, that is exerted on the at least one sheet, while the test is carried out on the sheet as such, that is, on the pad without the other sheet and the beverage preparation product but with preservation of its shape such as when the sheet forms part of the pad. For carrying out the test, the sheet as such, that is, the pad without the other sheet and the beverage preparation product, is laid on a horizontal surface, such that the sheet is supported by its longitudinal edge on the horizontal surface, the horizontal surface provided with an elongated groove having a width of 30 mm and the sheet, symmetrically with respect to the groove, overlying the groove and supported on opposite sides of the groove on the horizontal surface, while in carrying out the test use is made of a knife having a length corresponding to the diameter of the pad, a cutting face of the knife having a thickness of 3 mm and a length direction of the cutting face extending in horizontal direction in a length direction of the groove, wherein for testing, the knife from a position above the pad is moved down in vertical direction with a constant speed of 100 mm/minute, a center of the cutting face situated, viewed in vertical direction, above a center of gravity of the sheet, and wherein from the moment that the knife touches the sheet the resistance in units Newton is measured that the knife experiences as a result of the deforming of the pad by the knife as the knife moves down and wherein the moving down is continued until the cutting face of the knife is in the groove at a 12 mm depth with respect to the horizontal surface and wherein a measured highest resistance is the measure of the bending stiffness of the sheet.

According to a preferred embodiment of the pad, the highest resistance measured according to the test, that is, the highest measured force in Newton, is in the range of 0.2-4 Newton, and/or the highest measured force in the test, is greater than 1 Newton. Preferably it holds that the longitudinal edge of the second sheet at commencement of the test abuts wholly fittingly against the horizontal surface.

In this application the thickness of a sheet is defined according to NEN-EN-ISO 53-2011.

Preferably it holds that the pad is of disc-shaped design, while the longitudinal edges of the first sheet and the second sheet are each in a flat plane, have the shape of a circle and have a diameter within the range of 45-90 mm, preferably 70-80 mm, more preferably 73-76 mm, in particular of approximately 74.4 mm. Preferably it holds that the at least one sheet within the contours of the sealing seam is designed to be homogeneously permeable to a fluid such as water.

In addition, it can be effected that the thickness of the at least one sheet is in the range of 50-500 micrometer (µm), preferably in the range of 100-500 micrometer, preferably in the range of 110-350 micrometer, more preferably in the range of 150-300 micrometer. Preferably it holds for the at least one sheet with this dimensions being a bottom sheet and preferably the second sheet of the embodiment of the pad shown further below in Fig. 1. What is thus effected is on the one hand that the at least one sheet is not too heavy and on the other hand also that the at least one sheet is well permeable to the fluid. In particular, it holds here that when the fluid is being caused to flow through the pad, a pressure drop across the beverage preparation product is greater than a pressure drop across the at least one sheet, in particular 10 times greater, more particularly 20 times greater. The thickness of the other sheet can be, for example, 1.4-10 times smaller than the thickness of the at least one sheet.

Preferably it holds that the at least one sheet comprises a first layer at least substantially consisting of PETP and a second layer at least substantially consisting of CPP, wherein at least one of the first or the second layer and/or at least one third layer comprising the enforcement compound.

Preferably it holds that the at least one sheet within the contours of the sealing seam comprises a smoothly running inner and outer surface and also preferably that the at least one sheet is made more form-retaining by means of a heat treatment. A pad according to any one of the preceding claims, characterized in that the at least one sheet comprises a filtering paper.

Preferably it holds that the at least one sheet is of less transparent design than the other sheet and further preferably that the at least one sheet is of at least substantially opaque design.

With regard to a special embodiment it holds preferably that the other sheet and preferably the first sheet is of flexible design. Further it is made of filtering paper known per se. Preferably it holds that the other sheet is provided with at least 70% of cellulose fibers and/or cellulose filaments, more preferably with at least 80% of cellulose fibers and/or cellulose filaments, still more preferably with at least 90% of cellulose fibers and/or cellulose filaments, while possibly for the rest the first sheet is made of plastic polymers of a kind as mentioned above, in particular in the form of plastic fibers and/or plastic filaments. The other sheet preferably comprises less than 30 percent of plastic polymers.

The other sheet may also be made from PLA for 100%. Also, the other sheet can consist of PLA and Paper, for example, 25% PLA and 75% Paper. These polymers may be of a same kind as has been discussed for the at least one sheet before. It is also possible, however, that the other sheet is of form-retaining design and is preferably made of a same material as the at least one sheet. It is also possible, that the at least one sheet is different from the other sheet.

Preferably it holds that the first sheet and the second sheet are manufactured from a same sheet or same sheets. If the first sheet and the second sheet have undergone a heat treatment for making the sheet form-retaining, in that case, preferably, the heat treatment will also be the same, so that the first sheet and the second sheet have the same properties.

In particular, it holds that the part of the second sheet that is situated within the contours of the sealing seam is of dish-shaped design, while, in particular, the first sheet is of flat design. This has as an advantage that the coffee pad is self-locating when it is placed in a holder having a shape corresponding to the pad. The intention is then for the second sheet to come to rest on the bottom of such a holder.

It is also possible that the part of the first sheet that is situated within the contours of the sealing seam is also of dish-shaped design and especially similar or identical to the design of the second sheet. Preferably it holds in this regard that the pad is provided as a symmetrical pad, wherein the first sheet and the second sheet having principally the same shape.
Further it preferably holds that the envelope bounds the inner space.
As a special embodiment it preferably holds that the part of the second sheet that is within the contours of the sealing seam is of dish-shaped design while in particular the first sheet is of flat design.
In general it preferably holds that the extractable product consists of ground coffee while in particular the ground coffee is condensed to a hard cake and/or that the extractable product is condensed to a hard cake and/or that the beverage preparation product consists of a product to be extracted, more particularly of ground coffee.
As a special embodiment it further preferably holds that at least the first and/or the second sheet is shaped such that it is provided with at least one groove or a multiplicity of grooves especially to increase the form retention of the sheet, at least one groove for instance extending in a radial direction and/or radial spiralling direction or similar winding radial direction of the pad and/or extending in a circle or similar path around an axis, in an especially concentric pattern or in a non-concentric pattern, preferably all paths closed or open on themselves, and/or extending in a winding path or curved path and especially a helical or similar path and/or extending around an axial axis of the pad, for instance in the sealing seam or on the sheet inside an area enclosed by the sealing seam and preferably around an axis so that it is extending along said axis with a smaller diameter than the sealing seam.
This especially provides a form-retaining or form-enforced sheet and therefore a form-retaining or form-enforced pad in addition to the before. However the grooves can also provide fluid guiding means or similar means. The before mentioned grooves can be recesses, projections, folds or similar elevations and/or recessions. They can extend in circles or similar passes around an axis, in concentric patterns or in non-concentric patterns. The paths of extension can be closed or open on themselves. They can extend in winding paths or curved paths and especially helical or similar paths. It is possible to provide the grooves with uniform arrangement; however it is also possible that the grooves are changing their groove depth, width, shape etc. It is especially possible that the grooves are increasing and/or decreasing along their major extension direction. With regard to the grooves it preferably holds that the sheet comprising the grooves is formed like the bowl of a cup cake, comprising especially meandering grooves extending form a central area to the rim portions of the bowl, ending up in or before the sealing seam.

Also it preferably holds that at least the first and/or the second sheet and/or the pad are made in such a way that the sheets and/or the pad are compostable.

In general it is possible to arrange the sheet comprising at least one base compound comprising plastic as mentioned above and at least one enforcement compound as mentioned above. Further it is possible to provide the sheet comprising multiple base compounds e.g. a of plastic and cellulose material and further comprising at least one base compound. It is further possible to provide the sheet as a filtering paper comprising plastic and cellulose further comprising at least one enforcement compound. At least one of the compounds is preferably provided as fibres and/or filaments.

The system according to the invention is, to that end, provided with a coffee-maker which is provided with a holder for receiving the pad, a cover for closing off the holder, and fluid means for generating a fluid flow under pressure, wherein the holder is provided with at least one beverage outflow opening and the cover is provided with at least one fluid inflow opening which are in fluid communication with the fluid means for supplying the fluid flow to the fluid openings so that the fluid is supplied under pressure to the first sheet of the pad so that the fluid is pressed through the pad for the preparation of the beverage in the pad, the beverage leaving the pad via the second sheet to proceed to leave the holder via the at least one beverage outflow opening.

Preferably, it holds here that the holder is provided with a bowl-shaped inner space, which is bounded by the bottom and an upstanding sidewall of the holder, wherein the bottom consists of an outer horizontally directed ring-shaped bottom part which adjoins the sidewall and an inner dish-shaped bottom part, wherein the dish-shaped bottom part adjacent the ring-shaped bottom part slopes downwards in a direction directed away from the sidewall and wherein the at least one outflow opening is provided in the dish-shaped bottom part. As mentioned, the pad rests on the bottom, while the second sheet extends along the bottom to near the upstanding edge. Preferably, the sealing seam of the pad then rests on the ring-shaped bottom part. In particular, it holds here that in the dish-shaped bottom part grooves are provided which form a fluid path to the at least one beverage outflow opening, while the grooves extend exclusively under the beverage preparation product in the pad. The portion of the bottom that is not provided with grooves, more particularly the ring-shaped bottom part, can then form a fluid sealing with that portion of the second sheet that rests on said areas of the bottom when the pad becomes moist through the fluid.

In particular, it holds that the at least one outflow opening is provided with a nozzle for generating a jet of the beverage. With the aid of the jet, in a manner known per se, air can be beaten into the prepared beverage for obtaining a beverage with a fine-bubble foam layer when it has been received in, for example, a cup. To this end, the system may for instance be provided with an impact surface impacted by the jet for beating air into the beverage to obtain a beverage with a fine-bubble foam layer.

In particular, it holds that the fluid is supplied to the first sheet with a pressure of 0.9 to 1.5 bar above atmospheric pressure. At this relatively low pressure, still a beverage with a good fine-bubble foam layer can be obtained that is comparable to beverages that are prepared under high pressure, as is the case with a coffee bed through which hot water is caused to flow under a pressure in excess of 10 bar.

The pad according to the invention is filled with a beverage preparation product for preparing beverage, the beverage preparation product comprising a product to be extracted with a fluid (and/or a product soluble in a fluid). The product to be extracted with a fluid can consist of, for example, ground coffee or tea-leaves. A product soluble in a fluid can consist of, for example, milk powder, chocolate milk powder and the like.

According to a particular embodiment of the system according to the invention, the system is further provided with a known coffee pad (such as a prior art coffee pad as defined in EP 904 717 A1) provided with an inner space which is filled with ground coffee, wherein the inner space is formed by a top sheet and a bottom sheet which are interconnected adjacent their longitudinal edges, wherein the top sheet and the bottom sheet also form an outer side of the pad and are each made of flexible filtering paper and wherein the coffee pad and the holder are tailored to each other so that the coffee pad can be received in the holder for preparing coffee, such that, in use, the fluid is supplied under pressure to the top side of the pad and is pressed through the pad so that the fluid flows through the top sheet, whereby in the pad a coffee extract is formed which proceeds to leave the pad via the bottom sheet and wherein the coffee extract proceeds to flow out of the holder via the beverage outflow opening of the holder. With such a system, a user can therefore use, as desired, the known coffee pad and the pad with the form-retaining at least one sheet in one and the same coffee-maker.

The invention also relates to a a system provided with the inventive pad as disclosed herein and a coffee-maker, wherein the coffee-maker is provided with a holder for receiving the pad, a cover for closing off the holder, and fluid means for generating a fluid flow under pressure, wherein the holder is provided with at least one beverage outflow opening and the cover is provided with at least one fluid inflow opening which are in fluid communication with the fluid means for supplying the fluid flow to the fluid openings so that the fluid is supplied under pressure to the first sheet of the pad so that the fluid is pressed through the pad for the preparation of the beverage in the pad, the beverage leaving the pad via the second sheet to proceed to leave the holder via the at least one beverage outflow opening.

The invention also relates to the use of the inventive pad as disclosed herein, wherein the pad is placed in a holder which is provided with at least one beverage outflow opening, the holder with the pad therein is closed off with a cover which is provided with at least one fluid inflow opening, and a fluid is supplied under pressure to the at least one fluid inflow opening so that the fluid is supplied via the first sheet to the beverage preparation product in the pad for preparing the beverage and wherein the beverage leaves the pad via the second sheet, wherein the beverage proceeds to leave the holder via the at least one beverage outflow opening.

The invention further relates to a method for preparing a beverage with the inventive pad as disclosed herein, wherein the pad is placed in a holder which is provided with at least one beverage outflow opening, the holder with the pad therein is closed off with a cover which is provided with at least one fluid inflow opening, and a fluid is supplied under pressure to the at least one fluid opening so that the fluid is supplied via the first sheet to the beverage preparation product in the pad for preparing the beverage and wherein the beverage leaves the pad via the second sheet, wherein the beverage proceeds to leave the holder via the at least one beverage outflow opening.

The invention further relates to a method for making a pad as mentioned before, wherein in step a. a set-up of a third sheet, fourth sheet and the beverage preparation product is made, with the beverage preparation product situated between the third sheet and the fourth sheet, and then in step b. the third sheet and the fourth sheet are joined together, thereby forming the sealing seam so that the beverage preparation product is included in the inner space, wherein the third sheet is made of the same material as the first sheet and wherein the fourth sheet is made of the same material as the second sheet, characterized in that the fourth sheet is heated in a step c. and then is cooled in a step d. for increasing the bending stiffness of the fourth sheet and wherein at least one sheet and preferably the second sheet is made as mentioned before with regard to the inventive pad.

The invention also relates to a method for making the inventive pad, wherein in step a. a set-up of a third sheet, fourth sheet and the beverage preparation product is made, with the beverage preparation product situated between the third sheet and the fourth sheet, and then in step b. the third sheet and the fourth sheet are joined together, thereby forming the sealing seam so that the beverage preparation product is included in the inner space, wherein the third sheet is made of the same material as the first sheet and wherein the fourth sheet is made of the same material as the second sheet, characterized in that the fourth sheet is calendered in a step g. for increasing the bending stiffness of the fourth sheet, wherein step g. is carried out before step a. and before step b, and wherein at least one sheet and preferably the second sheet is made as mentioned before with regard to the inventive pad.

Preferably it holds that the fourth sheet is heated in step c. to a temperature of 200-400 degrees Celsius and more preferably that the fourth sheet is heated in step c. to a temperature of 90-200 degrees Celsius, in particular when the second sheet is made of PLA.
Preferably it further holds that in a step e. the fourth sheet is placed in a mold so that the fourth sheet obtains a predetermined shape and especially obtains a shape where the part of the second sheet that is within the contours of the sealing seam is of dish-shaped design while in particular the first sheet is of flat design and/or obtains a shape where the second sheet has a shape corresponding to the shape of the bottom of the holder of the system mentioned above. Further preferably it holds that the fourth sheet upon carrying out step e. further obtains the shape in such a way that the second sheet within the contours of the sealing seam comprises a smoothly running inner and outer surface and/or a shape comprising the grooves as mentioned above

Preferably it holds that the beverage preparation product in a step f. is placed on the fourth sheet, preferably while the fourth sheet is already in the mold, and that step b. is carried out after step f, and further preferably that step c. is carried out after step f.

Preferably it holds that the third sheet and/or the fourth sheet during the carrying out of step b. is heated to 90-400 degrees Celsius, in particular 90-200 degrees Celsius and preferably further it holds that the fourth sheet and possibly the third sheet is cooled after carrying out step b.

For redundancy reasons further specifications of said above use and methods for preparing a beverage and the methods for making the inventive pad are omitted here wherein all these specifications can be taken from the passages dealing with the inventive system, pad and method for use and for preparation of such a pad as well from the below described embodiments respectively.

The invention will now be further elucidated with reference to the drawings, in which:
Fig. 1 shows a possible embodiment of a pad according to the invention;
Fig. 1a shows a cross-section of one embodiment of a sheet used with the embodiment of Fig. 1;
Fig. 1b shows a cross-section of another embodiment of a sheet used with the embodiment of Fig. 1;
Fig. 2 shows an embodiment of a system according to the invention which is provided with the pad according to Fig. 1 and a coffee-maker;
Fig. 3 shows a top plan view of a holder of the coffee-maker according to Fig. 2;
Fig. 4 shows an embodiment of the system according to Fig. 2 which is further provided with a flexible pad of filtering paper;
Figs. 5.1-5.3 show schematically a method for making a sheet used with a pad according to Fig. 1 and the method according to Figs. 5a-5f
Figs. 5a-5f show schematically a method for making the pad as discussed above;
Fig. 6 shows an elevational view of the second sheet of possible embodiments of the pad according to the invention;
Fig. 7.1 shows a side elevational view of an apparatus for determining a form-retention of a second sheet of a pad;
Fig. 7.2 shows a view according to 7.2 of Fig. 7.1;
Fig. 7.3 shows a view according to 7.3 of Fig. 7.1;
Fig. 7.4 shows a side elevational view similar to Fig. 7.1 at the moment that a knife is just beginning to touch the pad;
Fig. 7.5 shows a side elevational view similar to Fig. 7.1 when the knife has reached a lowest position; and
Fig. 7.6 shows a curve of a measured force during the test.

It has to be mentioned, that specifications mentioned with regard to the second sheet, especially specifications regarding the used material and measures are also applicable with the first sheet, and vice versa. Further it has to be mentioned that all specifications mentioned above and relating to the inventive pad, the use of the pad, the method of preparing a beverage and the methods for making the inventive pad are applicable with the following examples of embodiments.

In Fig. 1, with reference numeral 1 a pad for use in a coffee-maker is shown, preferably comprising at least one of the before mentioned above specifications. The pad is of a type intended for preparing one or two cups of beverage. A cup of beverage can consist, for instance, of 20-200 ml of beverage, more particularly of 20-180 ml of beverage. The pad 1 is provided with an envelope 2A, 2B with an inner space 4 which is filled with a beverage preparation product 6 which is shown in hatched representation in the drawing. In this example, it holds that the envelope bounds the inner space. The beverage preparation product is intended for preparing a beverage. To this end, the beverage preparation product comprises a product to be extracted with a fluid and/or possibly a product soluble in a fluid.

In this example, it holds that the beverage preparation product comprises exclusively a product to be extracted with a fluid, more particularly, this concerns ground coffee. The envelope is formed by a first disc-shaped sheet 2A and a second disc-shaped sheet 2B which are interconnected adjacent their longitudinal edges 8. The interconnected parts of the first sheet 2A and the second sheet 2B form a sealing seam 10. The sealing seam therefore has the shape of a ring. The first sheet and the second sheet each form a filter which can pass a fluid and which forms a barrier to the beverage preparation product. This makes it possible that, in use, with a coffee-maker a fluid such as water is supplied under pressure to the pad so that the fluid is pressed through the pad for obtaining a beverage which thereupon leaves the pad again. All this will be discussed in more detail with reference to Fig. 2.

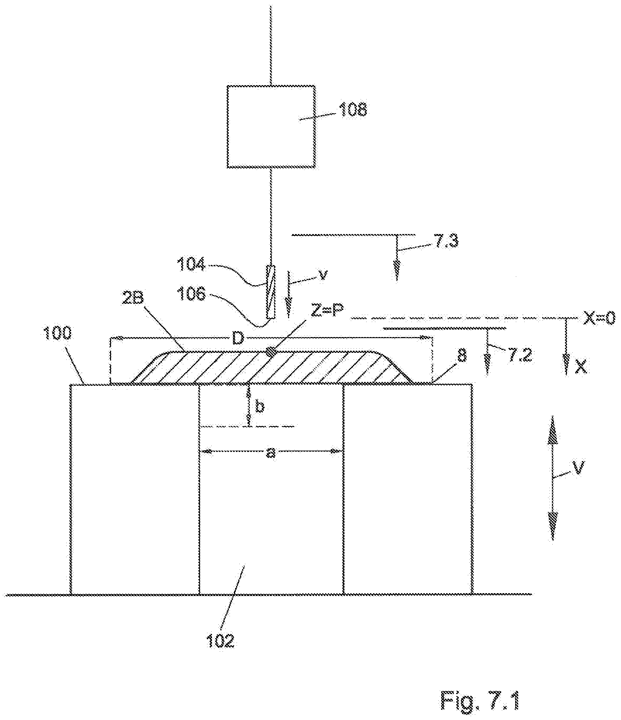

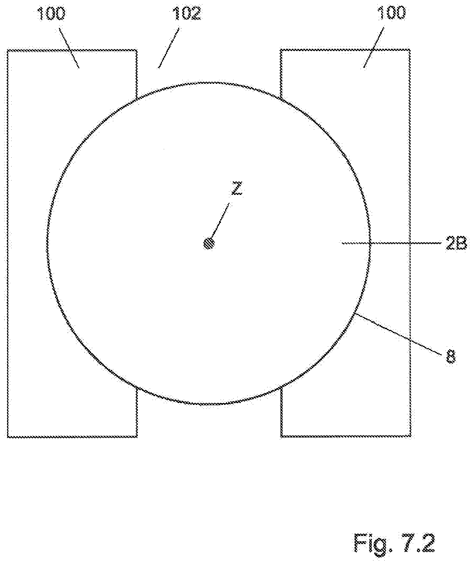

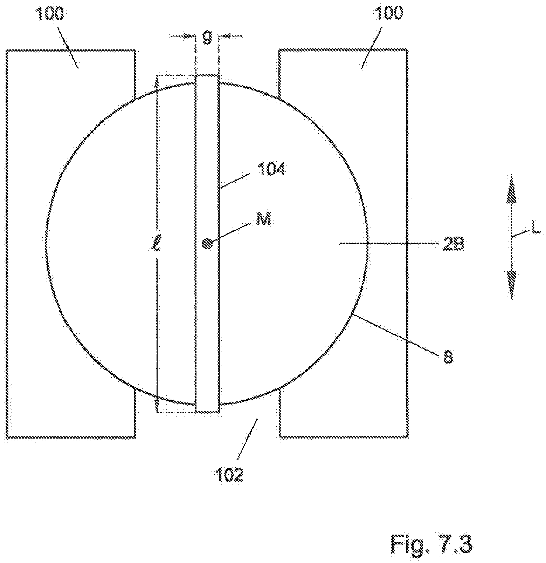

In this example, it holds furthermore that the second sheet 2B is of form-retaining design. The form retention of the second sheet, according to a test, is expressed in a force, measured during the test, which is exerted on the second sheet, while the test is carried out on the second sheet as such, that is, on the pad without the first sheet and the beverage preparation product; see Figs. 7.1-7.3.

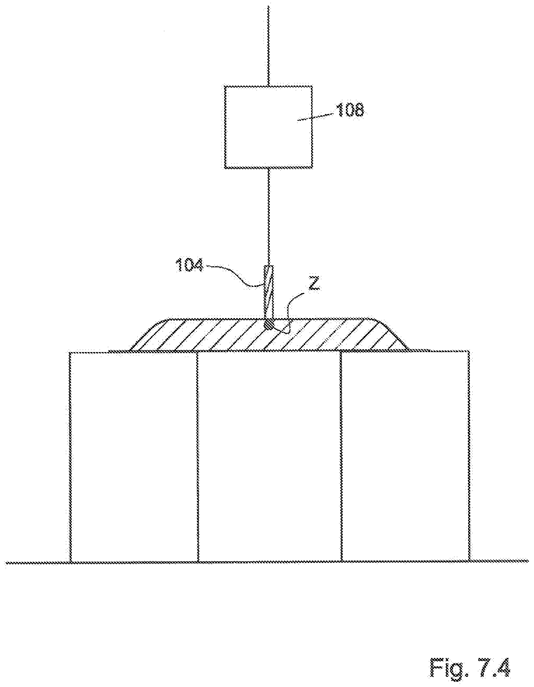

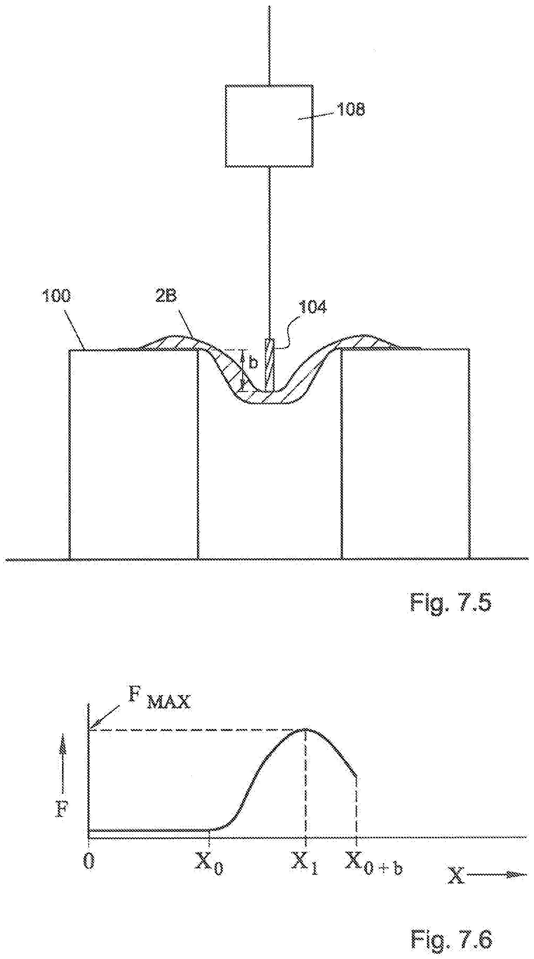

For carrying out the test, the second sheet 2B as such, that is, the pad without the first sheet and the beverage preparation product, but with preservation of its shape such as when the second sheet forms part of the pad, is laid on a horizontal surface 100, such that the second sheet is supported by its longitudinal edge 8 on the horizontal surface, while the horizontal surface is provided with an elongated groove 102 which has a width *a* of 30 mm, and while the second sheet, symmetrically with respect to the groove, overlies the groove and on opposite sides of the groove is supported on the horizontal surface. In carrying out the test use is made of a knife 104 having a length *l* which corresponds to the diameter D of the pad. A cutting face 106 of the knife has a thickness of 3 mm. A length direction L of the cutting face 106 extends in horizontal direction in a length direction L of the groove. For testing, the knife, from a position above the pad, is moved down in vertical direction V with a constant speed *υ* of 100 mm/minute, while a center M of the cutting face is situated, viewed in vertical direction, above a center of gravity Z of the second sheet. Because the second sheet has the shape of a disc with a center P, this center P corresponds to the center of gravity mentioned. Moving the knife down is carried out with a load cell 108. Prior to carrying out the test, the longitudinal edge 8 lies wholly fittingly against the surface 100. From the moment that the knife touches the second sheet (Fig. 7.4) the resistance in units Newton is measured that the knife experiences as a result of the deforming of the pad by the knife as the knife moves down. In other words, the force is measured that the knife experiences from the second sheet as the knife moves down. Before the knife touches the second sheet, this force is zero. Thereupon this force starts to run up. Moving down is continued until the cutting face of the knife is in the groove at 12 mm depth b with respect to the horizontal surface (see Fig. 7.5). A highest resistance or force measured with the load cell 108 is the measure of the bending stiffness of the second sheet. This highest resistance Fmax is measured in Newton. As the knife moves down and initially touches the second sheet, the second sheet will first deform elastically. Thereafter, upon further downward movement, the second sheet is deformed. The measured greatest force typically corresponds with the moment just before which the second sheet buckles and hence yields under the load of the knife. After buckling the force can decrease again.

In other words, the force is measured that the knife experiences as a result of the pad deforming. In Fig. 7.6 this force F is plotted as a function of the distance x over which the knife is moved down. From x=x0 the force F starts to rise from F=0. The maximum measured force Fmax is at x=x1. At x=x0+b the knife has reached the point of its maximum downward travel. The measured measure for the form retention of the second sheet is F max.

The measured greatest force is preferably in the range of 0.2-4 Newton, and/or is preferably greater than 1 Newton.

In particular, it holds that the second sheet also remains form-retaining when a fluid such as the beverage and/or water is caused to flow through it, while the fluid can have a temperature of at most 80 degrees Celsius. In other words, when the fluid has a temperature that can run up to 80 degrees Celsius, the second sheet keeps the form-retaining properties mentioned.

More particularly, it holds here that the second sheet remains form-retaining when a fluid is caused to flow through it, while the fluid can have a temperature of at most 90 degrees Celsius and preferably at most 99 degrees Celsius.

In this example, it holds that the second sheet is made of a thermoplastic material. A thermoplastic material is a material that becomes more plastic as the temperature rises. Accordingly, it holds in this example that the second sheet also remains form-retaining when it comes into contact with a fluid such as a beverage and/or hot water that has a temperature of 80 degrees Celsius. Because a thermoplastic material is involved here, it will also hold that the sheet remains form-retaining when it comes into contact with a fluid having a temperature that is lower than 80 degrees Celsius.

More particularly, it holds that the second sheet also remains form-retaining when it comes into contact with a fluid of 90 degrees Celsius and preferably of 99 degrees Celsius. What is involved then, as mentioned, is a second sheet that is made of a thermoplastic material.

In this example it holds that the nonwoven material has been made form-retaining through a heat treatment. This means that the sheet-form material is brought into the required shape such as it is shown for the second sheet 2B, after which the second sheet undergoes a heat treatment so that the second sheet after cooling becomes form-retaining.

The thickness of the second sheet in this example is in the range of 50-600 micrometer. Preferably, it holds that the thickness is in the range of 100-500 micrometer, more particularly in the range of 150-300 micrometer. The thickness mentioned is schematically denoted in Fig. 1 with the letter h. The thickness of the first sheet 2A is, for example, 1.4-10 times smaller than the thickness of the second sheet 2B. The thickness mentioned is schematically denoted in Fig. 1 with the letter h'.

As can be seen in Fig. 1, it holds that the part of the second sheet that is within the contours of the sealing seam is of dish-shaped design. Also, it holds in this example that the first sheet is of flat design. The part of the second sheet that is within the contours of the sealing seam, as shown in Fig. 2, has a diameter denoted with d. The diameter of the whole pad is denoted with D in Fig. 2. Also, this means that the ring-shaped sealing seam 10 has a diameter of (D-d)/2. In this example, D is approximately 74.4 mm and d is approximately 61 mm. Other dimensions are conceivable for D. D can be, for instance, in the range of 45-90 mm, preferably 70-80 mm, more preferably 73-76 mm, in particular approximately 74.4 mm.

As shown in Fig. 1, the pad 1 comprises two sheets, a first sheet 2A and a second sheet 2B, wherein each sheet comprises at least one layer, and wherein at least one of the first sheet and the second sheet, here the second sheet 2B, is of form-retaining design, made of at least one base compound comprising meltable polymers and preferably fibers and/or filaments of the same, and at least one enforcement compound comprising at least meltable polymers of the group of abaca, banana plant, flax, hemp, lyocell, tencel, kenaf, nettles, ramie, bamboo, bowstring, indian hemp, jute, cotton, coir, sisal, agave and preferably fibers and/or filaments.

As shown in Fig. 1a and Fig. 1b the above at least two different compounds can be in multiple ways for providing the form retaining sheet 2B. This has also been explained in the general part above and here fully applicable. In a first embodiment and shown with Fig. 1a the sheet can comprise of at least one first layer 5 comprising at least one base compound without an enforcement compound and at least one second layer 7 comprising at least one enforcement compound. It preferably holds that also the second layer 7 comprises at least one base compound. Here the enforcement compound is connected with at least one base compound, e.g. PLA or one of the above mentioned meltable polymers to form the layer 7 being applicable on the first layer 5. Preferably the second layer 7 bonded to first layer 5 or vice versa, and further, like also shown in Fig. 1 and 1a, bonded to the outside of the first layer, facing away from the inner space 4 of the pad 1. Like mentioned above it is also possible that the at least one sheet is comprising multiple of the first layers 5 and/or of the second layers 7, wherein preferably at least one first layer is arranged between at least two second layers and/or vice versa.

In a second embodiment and shown with Fig. 1b the sheet 2B can comprise of at least one first layer 5 comprising at least one layer 5 comprising a preferably homogeneous mixture of the at least one base compound and the at least one enforcement compound. The mixture can also be applied in a non-homogeneous way, e.g. with a higher density of the enforcement compound in the area of the layer facing away from the inner space 4 of the pad 1, etc.
As mentioned it is also possible to arrange multiple of the above layers and of the layers described in the above general part adjacent with each other. Further especially all the materials, especially the plastics, celluloses, woven and nonwoven material mentioned in the above general part are applicable.

In Fig. 2 a system is shown in which the pad of Fig. 1 is used. The system is provided with a coffee-maker 14 which is provided with a holder 16 for receiving the pad 1. Further, the coffee-maker is provided with a cover 18 for closing off the holder 16. The coffee-maker is furthermore provided with fluid means 20, 22 for generating a fluid flow under pressure. In this example, these fluid means consist of a pump 20 and a storage vessel 22 which is filled with a fluid, in this example with hot water. The temperature of the water can be, for example, 70-98 degrees Celsius. To that end, the storage vessel 22 is provided with a heating element 24. The storage vessel 22 itself in turn may be filled from a larger storage vessel, which comprises cold water. This larger storage vessel is not shown in the drawing. The pump 20, in use, supplies hot water via a duct 26 to an inner space 28 of the cover 18. A bottom 30 of the cover is provided with a multiplicity of inflow openings 32. The holder 16 is provided with a bowl-shaped inner space 36 which is bounded by a bottom 34 of the holder and an upstanding sidewall 38 of the holder. The bottom consists of an outer horizontally directed ring-shaped bottom part 40 which adjoins the sidewall 38. Furthermore, the bottom comprises an inner dish-shaped bottom part 42, while the dish-shaped bottom part adjacent the ring-shaped bottom part slopes downwards in a direction directed away from the sidewall, to the inside of the holder. The ring-shaped bottom part is provided with an outer edge 41 which adjoins the sidewall 38 and an inner edge 43 which adjoins the dish-shaped bottom part 42. The bottom is provided with at least one outflow opening 44. This outflow opening in this example is located in the dish-shaped bottom part 42. As shown in Fig. 2, it holds that the pad 1 rests on the bottom 34, with the second sheet extending along the bottom to near the upstanding sidewall 38. The sealing seam 10 of the pad then rests on the ring-shaped bottom part 40. As can be seen, the second sheet has a shape that corresponds to the shape of the bottom of the holder. The second sheet here has a smoothly running inner and outer surface within the sealing seam. In this example, it holds furthermore that in the dish-shaped bottom part 42 grooves 46 are provided. The grooves extend exclusively under the beverage preparation product 6 in the pad. In this example, it holds that the grooves 46 are formed by a multiplicity of projections 54 of the bottom. Between the upstanding projections 54, the respective grooves are formed. According to the invention, the grooves may also be differently formed, for instance as slots provided in the bottom and extending, for instance, in radial direction towards the outflow opening 44. The bottom is at least partly of smooth design and is made of a plastic and/or metal. The upper sides of the tops are smooth, just like the rest of the bottom. In this example, it holds that the beverage preparation product is ground coffee. As can be properly seen, the ground coffee 6 forms a coffee bed. The grooves are under the coffee bed but also within the contours of the coffee bed, i.e., within the contours of the positions where the beverage preparation product is situated in the pad. The dish-shaped bottom part comprises an inner flat bottom part which is denoted with d' in Fig. 2. As can be seen, the grooves extend exclusively in this inner bottom part d' which is flat. Further, it holds that the at least one outflow opening 44 is provided with a nozzle 46 for generating a jet of the beverage as will be further elucidated hereinafter. To this end, the system is further provided with an impact member 50 which, in use, is impacted by a jet of the beverage made. The working of the system described up to this point is as follows.

A user will first of all remove the cover 18 for placing the pad 1 of Fig. 1 in the holder 16 of Fig. 2. Because the pad is provided with the second sheet 2B which is form-retaining, the pad will of itself slide into the right position as the pad is positioned in the bottom. The pad is, as it were, self-locating and ends up in the position as shown in Fig. 2. After this, the holder can be closed off with the cover as shown in Fig. 2. Thereupon a user operates the control unit 52 of the coffee-maker 14. The result is that the control unit 52 activates the pump 20. As a result, hot water is supplied from the storage vessel 22 via the duct 26 to the inner space 28 of the cover 18. This water will leave the cover 18 and flow into the holder via the inflow openings 32. The consequence is that the water is supplied under pressure from the upper side of the pad to the first sheet of the pad. The pressure in this example is 1.1 bar above atmospheric pressure. The hot water will then penetrate via the first sheet 2A into the inner space of the pad. Here, the hot water comes into contact with the ground coffee so that the coffee beverage is formed. The coffee beverage leaves the coffee pad via the second sheet 2B. As a result of the second sheet 2B becoming moist, it will form a sealing with the bottom 34, there where there are no grooves. There where the grooves are, the beverage will leave the pad. As a result of the grooves extending exclusively under the coffee bed, bypass is avoided. What is further avoided is that the hot water forms channels extending in vertical direction through the coffee bed. Such channels would preclude an optimal and efficient extraction of the ground coffee. Since, in addition, the grooves extend in a flat part of the bottom, this enables the second sheet to properly abut the bottom, so that it's the grooves that determine where the beverage can flow out of the pad. The beverage proceeds to flow via the grooves to the outflow opening 44. Because the outflow opening 44 is provided with a nozzle 47, while moreover it holds that the fluid is supplied to the pad under pressure, the coffee beverage will be formed into a jet that impacts the impact surface 50. As a result, the beverage will be atomized in a chamber 62 of the holder which is open at its underside 64. When the beverage is thereupon received in a cup, a beverage is obtained with a fine-bubble foam layer. After preparation of the beverage, the holder can be opened again by removing the cover. The pad 1 can then be removed easily in that the second sheet is still form-retaining.

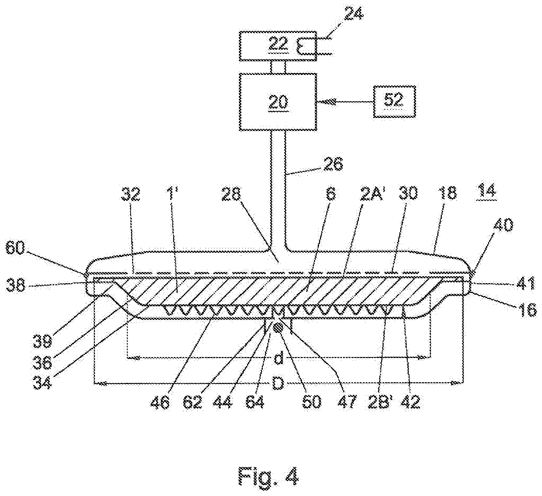

In this example, it holds that the cover is provided with a sealing ring 60 which seals fluid-tightly against the upstanding sidewall 38 of the holder. It is also possible, however, that the upstanding sidewall 38 is provided with the sealing ring, this sealing ring then sealing against the cover 18. In this example, the second sheet is of form-retaining design. It is also possible, however, that the first sheet is also of form-retaining design. Preferably, it holds here that the first sheet is made of a same material as the second sheet. More particularly, it holds here that the first sheet and the second sheet are made from a same sheet or same sheets. In this example, the beverage preparation product consists of ground coffee. It is also conceivable, however, that the beverage preparation product consists of, for example, tea. (Furthermore, it is possible that the beverage preparation product consists of a product soluble in fluid or a product that forms a dispersion such as milk powder and/or cacao for preparing milk or chocolate milk.) It is also conceivable that the beverage preparation product is provided with one of the extractable products mentioned or a different type of extractable product in combination with a fluid-soluble product. The fluid-soluble product in turn may consist of milk powder or a flavor enhancer. Also, it is conceivable that the pad is used in a different type of coffee-maker. Further, in the holder of the coffee-maker of Fig. 2, also a coffee pad 1' according to Fig. 4 may be placed, which is provided with an inner space which is filled with ground coffee, while the inner space is formed by a top sheet 2A' and a bottom sheet 2B' which are interconnected adjacent their longitudinal edges, while the top sheet and the bottom sheet also form an outer side of the pad and are each made from flexible filtering paper. The coffee pad 1' and the holder 16 are tailored to each other so that the coffee pad can be received in the holder for preparing coffee, such that, in use, the fluid is supplied under pressure to the upper side of the pad and is pressed through the pad so that the fluid flows through the top sheet whereby in the pad a coffee extract is formed which proceeds to leave the pad via the bottom sheet and wherein the coffee extract proceeds to flow out of the holder via the beverage outflow opening of the holder. The bottom sheet of the pad here extends over the bottom 34 of the holder up to the upstanding sidewall 38 of the holder, thereby also forming a sealing with the holder to prevent bypass. The beverage can leave the pad there where the grooves are. Accordingly, the invention also concerns a system provided with the coffee-maker, the pad 1 and the pad 1', allowing a user, as desired, to use the pad 1 or the pad 1' for preparing the beverage.

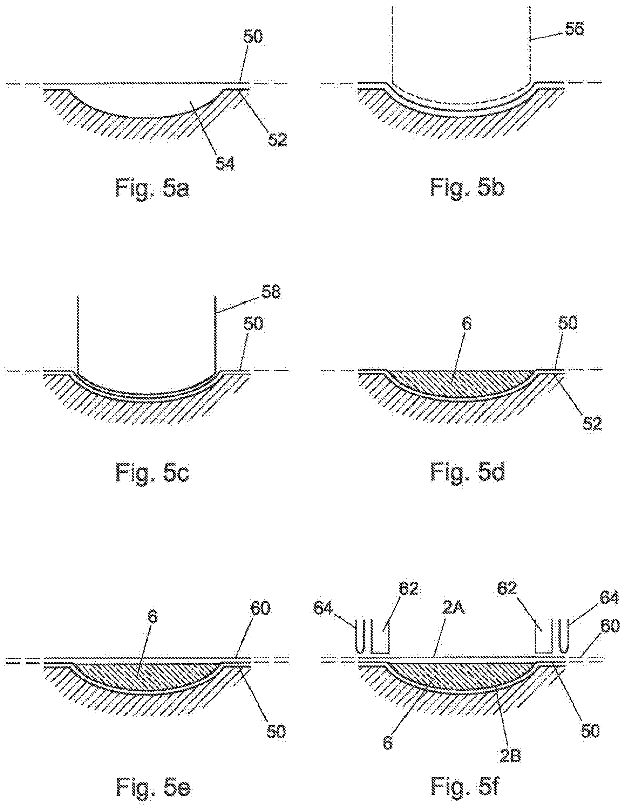

Figs. 5a-5f schematically show a method for making the pad as discussed above, wherein Figs. 5.1-5.3 show a method for making a sheet e.g. used with a pad according to Fig. 1 and the method according to Figs. 5a-5f.

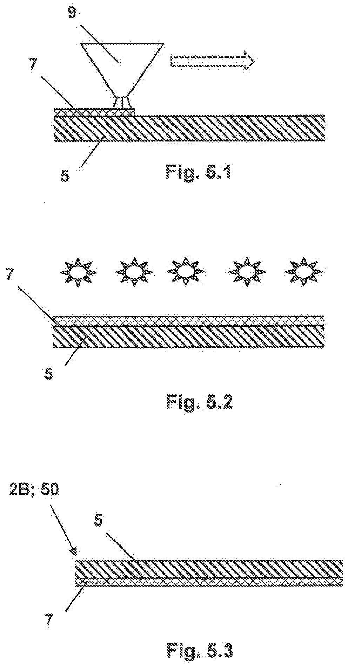

As shown in Fig. 5.1, a layer 5, comprising e.g. a base compound, like e.g. plastic polymers of the group of PE, PET, PETP, coPET, LLDPE, CPP, PLA and/or PP PLA and as mentioned already in the above general is provided. This layer can also e.g. be a filtering paper, a carton, a foil etc. By use of an application apparatus 9, e.g. a spraying means, a deposition means, a fluid curtain etc. a second layer 7 comprising at least one of the above enforcement compound is applied. This process can be a wet laying process, a dry laying process, a dip moulding process, a dilution forming moulding process, a spray-up moulding process, a pressing process etc.

As shown in Fig. 5.2, the applied second layer 7 or the whole produced sheet 2B is dried by use of drying means, e.g. infrared-applications means, hot-air application means, heating means or similar drying means. It is also possible to dry the applied enforcement layer and binder material respectively without these means, e.g. by air-drying.

As shown in Fig. 5.3 after the drying step, a form-retaining sheet material, here having two layers, and referred to as a fourth sheet 50 in the following, is provided. The same or a similar process can be used or providing a single layer sheet having e.g. a mixture of base and enforcement compound(s). In general all known methods for providing a single or a multiple layer sheet of woven or nonwoven compounds are applicable for providing the sheet used for making the inventive pad 1.

As shown with Fig. 1a and further explained for the method according to Figs 5a-5f, the produced sheet 2B; 50 is further processed to a pad 1, wherein here e.g. the sheet 2B; 50 is arranged in such a way that the second layer 7, comprising the enforcement compound is arranged on the outside of the pad 1. It is also possible to arrange the sheet(s) in such a way that the a layer comprising the enforcement compound is situated on the inside, i.e. within the inner space 4, being in contact with the beverage preparation product 6. It is also possible to provide it on both sides of the sheet.

In Fig. 5a it is shown that the fourth sheet 50 obtained e.g. by the method explained before is placed above a mold 52 made of metal. Through, for instance, vacuum suction of the mold cavity 54, the fourth sheet takes the shape of the mold cavity (Fig. 5b). Also, alternatively, the fourth sheet may be mechanically pressed into the mold cavity with a stamp 56 (represented in broken lines). Then, in Fig. 5c, for further enforcing the following steps can be performed: The fourth sheet is heated with a stamp 58. The fourth sheet is heated to, for example, 200-400 degrees Celsius. (The fourth sheet may also be heated in step c. to a temperature of 90-200 degrees Celsius, in particular when the second sheet is made of PLA.) The plastics in the sheet will thereby liquefy and/or soften. After this, the stamp 58 is removed and the fourth sheet is cooled. The sheet has now become form-retaining. The second sheet in this example will now already have a smoothly running inner and outer surface within the sealing seam to be formed.

Thereupon, the beverage preparation product 6 is positioned on the fourth sheet (Fig. 5d). Next, a third sheet 60 is placed above the fourth sheet 50 and the beverage preparation product. By means of a ring-shaped heating element 62, the fourth sheet and the third sheet are welded together (Fig. 5f), whereby the sealing seam 10 is formed. Next, with a ring-shaped die 64 the pad 1 is cut out. Alternatively pre-cut sheets can be provided. The cut-out part of the fourth sheet 50 then constitutes the second disc-shaped sheet 2B and the cut-out part of the third sheet 60 then constitutes the first disc-shaped sheet 2A. Accordingly, it holds that in a step a. a set-up of a third sheet, fourth sheet and the beverage preparation product is made, with the beverage preparation product situated between the third sheet and the fourth sheet (Fig. 5e), and then in a step b. the third sheet and the fourth sheet are joined together (Fig. 5f). Further, it holds that the fourth sheet is optionally heated in a step c. (Fig. 5c) and then is optionally cooled in a step d. for further increasing the bending stiffness of the fourth sheet.

Further, it optionally holds that the fourth sheet is heated in step c. to a temperature of 200-400 degrees Celsius or for instance 90-200 degrees Celsius. In a step e. the fourth sheet is placed in a mold so that the fourth sheet obtains a predetermined shape (Fig. 5b), while thereupon step c. (Fig. 5c) is carried out. In a step f. the beverage preparation product is placed on the fourth sheet, preferably while the fourth sheet is already in the mold (Fig. 5d), whereby step b. is carried out after step f. It also holds in this example that step c. (Fig. 5c) is carried out before step f. (Fig. 5d). The third sheet and/or the fourth sheet may during the execution of step b. be heated to 90-400 degrees Celsius, in particular 90-200 degrees Celsius. Also, it holds that the fourth sheet and possibly the third sheet are cooled after carrying out step b.

It is also possible, however, that step b. and step c. are carried out at the same time. This can be done by leaving out the step of Fig. 5c while in Fig. 5f the mold is heated for carrying out step c.

Such variants are each understood to be within the purview of the invention. Thus, it is also possible to make the fourth sheet more form-retaining by calendering and/or deep drawing it in a step g. before the step according to Fig. 5a is carried out. After this, the method can be continued as has been discussed with reference to Figs. 5a-5f. This means that calendering and/or deep drawing in step g. is carried out before step a. and step b. It is also possible that only the steps of Figs. 5a, 5b, 5d, 5e, and 5f are carried out. Accordingly, the step c. of heating and the step d. of cooling are then omitted.

Also, still other embodiments of the pad are conceivable.

The invention is by no means limited to the embodiments outlined. Thus, the second sheet can also comprise a foil and/or consist of a foil which is provided with a multiplicity of outflow openings and is made of a plastic. The outflow openings can for instance be circular and have a diameter of 0.15-0.6 mm. The plastic may be of a kind as discussed above. Also, it is conceivable that the second sheet comprises a first layer which consists at least substantially of PETP and a second layer which consists at least substantially of CPP. By heating the foil of the above-outlined kinds and bringing it in a desired shape and/or by appropriately choosing the thickness of the foil, the form retention of the second sheet can be adjusted to the desired level. Production of the pad can then take place as has been discussed with reference to Fig. 5. Also, first sheet may be composed from such a foil and a layer of woven or nonwoven material, such as, for example, filtering paper. This layer of nonwoven material can also consist of the nonwoven material which has been discussed above for the second sheet of the pad according to Fig. 1. This layer may be bonded to the foil by, for instance, heating. In addition, it holds for each of the above-outlined embodiments that the beverage preparation product may be tamped down and/or condensed, and thereby contributes to the form retention of the pad. Such tamping down and/or compaction may be carried out, for instance, in the situation of Fig. 5d, after which the pad is closed with the first sheet as discussed for Figs. 5e and 5f. In each embodiment the beverage preparation product may be provided with ground coffee.

In each of the embodiments outlined, the first and/or the second sheet 2A; 2B may have a smoothly running inner and outer surface within the sealing seam. However, the first and/or the second sheet may also be so configured as to be provided with at least one groove or a multiplicity of grooves to increase form retention of the sheet, with the grooves 80 extending, for instance, in radial direction of the pad and/or with the at least one groove 90 constituting a circumferential groove closed upon itself, extending around an axial axis of the pad, for example in the sealing seam (groove 90.1) or in the second sheet inside an area enclosed by the sealing seam 10 so that the pass of extension of the groove (90.2) has a smaller diameter than the sealing seam.

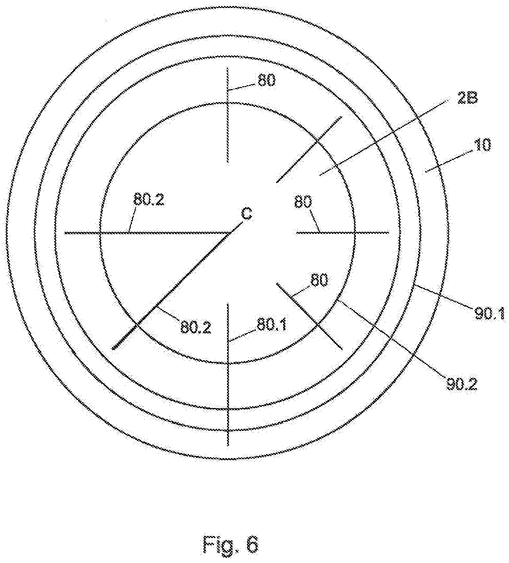

This is shown in Fig. 6 in which a view of the second sheet is shown. The radial grooves 80 preferably extend to near the sealing seam 10. It is also conceivable, however, that the radial grooves extend into the sealing seam 10 (indicated for one groove 80.1). Further the grooves can be arranged extending to a center C of the sheet and preferably intersecting each other. It is also possible to provide the grooves on a bowl-shaped sheet, like the second sheet 2B in an arrangement similar to a cup of a cup-cake, wherein grooves are extending primarily at inclined side walls preferably extending into the sealing seam. Preferably a bottom portion of the bowl-like formed sheet does not comprise grooves. This bottom portion is preferably basically flat. The grooves can be provided as alternating inward and outward grooves, oscillating with regard to the plane of the sheet in alternating directions, especially when seen in an annular cross section along a wall portion extending to the sealing seam.

The grooves in this example have a V-shaped cross section. Other shapes, such as a U-shaped cross section, are also possible. By providing the mold 52 with such grooves and providing the stamp 56 with ribs corresponding to these grooves, the fourth sheet and hence the second sheet can be provided with the respective grooves 80, 90 by carrying out with such a mold and stamp, as desired, one of the methods which have been discussed with reference to Fig. 5.

In the foregoing specification, the invention has been described with reference to a specific embodiment of the invention. It will, however, be evident that various modifications and changes may be made therein without departing from the scope of the invention as set forth in the appended claims.

## Claims

1. A form-retaining pad (1) for use in a coffee-maker for preparing 1 or 2 cups of beverage, provided with an envelope (2A, 2B) with an inner space (4) which is filled with a beverage preparation product (6) for preparing the beverage, wherein the beverage preparation product (6) comprises a product to be extracted with a fluid (and/or a product soluble in a fluid), wherein the envelope (2A, 2B) is formed by at least a first sheet (2A) and a second sheet (2B) which are interconnected adjacent their longitudinal edges (8), wherein the interconnected parts of the first sheet (2A) and the second sheet (2B) form a sealing seam (10) and wherein the first sheet (2A) and the second sheet (2B) each form a filter which can pass a fluid and which forms a barrier to the beverage preparation product, wherein, in use, with the coffee-maker a fluid such as water is supplied, under pressure, to the pad (1) so that the fluid is pressed through the pad (1) for obtaining the beverage which thereupon leaves the pad (1), and wherein each sheet comprises at least one layer, **characterized in that**
at least one of the first sheet (2A) and the second sheet (2B) is of form-retaining design, made of:
at least one base compound comprising meltable polymers and preferably fibers and/or filaments of the same, and
at least one enforcement compound comprising at least non-meltable fibers and/or filaments of the group of abaca, banana plant, flax, hemp, kenaf, nettles, ramie, bamboo, bowstring, indian hemp, jute, cotton, coir, sisal, agave, lyocell, tencel.

2. A pad (1) according to claim 1, **characterized in that** the at least one sheet (2A, 2B) comprises at least one layer comprising a preferably homogeneous mixture of the at least one base compound and the at least one enforcement compound or
**in that** the at least one sheet (2A, 2B) comprises at least one first layer (5) comprising at least one base compound without an enforcement compound and at least one second layer (7) comprising at least one enforcement compound, wherein the at least one second layer (7) optionally also comprises at least one base compound, and wherein the at least one second layer (7) is applied and preferably bonded to the at least one first layer (5) or vice versa.

3. A pad (1) according to any one of the preceding claims, **characterized in that** the at least one base compound comprises a thermoplastic material.

4. A pad (1) according to any one of the preceding claims, **characterized in that** the at least one base compound comprises a plastic, wherein this plastic is present at least partly in the form of fibers and/or filaments and
especially in the form of cellulose fibers and/or cellulose filaments which are provided with a plastic coating, and/or
that the enforcement compound is provided in the form of fibers and/or filaments which are provided with a plastic coating.

5. A pad (1) according to any one of the preceding claims and especially claim 4, **characterized in that** the plastic consists of plastic polymers or comprises plastic polymers, wherein preferably the plastic polymers comprise PE, PET, PETP, coPET, LLDPE, CPP, PLA and/or PP.

6. A pad (1) according to any one of the preceding claims, especially any one of the claims 4 or 5, **characterized in that** the at least one sheet is made of a nonwoven material, and especially comprises said plastic and/or said plastic and at least one enforcement compound.

7. A pad (1) according to any one of the preceding claims, **characterized in that** the base compound also comprises cellulose fibers and/or cellulose filaments and/or comprises plastic polymers preferably chosen from the group PE, PET, PETP, coPET, LLDPE, CPP, PLA and/or PP, wherein the plastic polymers are non-meltable up to a temperature of 170° Celsius, preferably 200° Celsius and more preferably 250° Celsius .

8. A pad (1) according to any one of the preceding claims, **characterized in that** the at least one sheet is made more form-retaining by means of a heat treatment and especially by means of calendering.

9. A pad (1) according to any one of the preceding claims, **characterized in that** the at least one sheet comprises a first layer (5) at least substantially consisting of PETP and a second layer (7) at least substantially consisting of CPP, wherein at least one of the first or the second layer (7) and/or at least one third layer comprising the enforcement compound.

10. A pad (1) according to any one of the preceding claims, **characterized in that** the base compound comprises Polylactic Acid (PLA) fibers.

11. A pad (1) according to any one of the preceding claims and especially claim 10, **characterized in that** the at least one sheet is comprising <100% Polylactic Acid (PLA) fibers and possibly derivatives, and for the rest the enforcement compound, or at least the enforcement compound and at least one base compound, so that the second sheet (2B) is at least substantially completely biodegradable after use.

12. A pad (1) according to any one of the preceding claims, and especially any one of the claims 10 or 11, **characterized in that** the at least one sheet consists for x% of Polylactic Acid (PLA) fibers and for (1-x)% of paper and/or at least one enforcement compound, with x being in the range of 50-80, preferably in the range of 60-70, more preferably approximately equal to 65, while in particular the PLA fibers have a melting point of 105-165 degrees Celsius.

13. A pad (1) according to any one of the preceding claims, **characterized in that** the other sheet is preferably provided with cellulose fibers and/or that the first sheet (2A) is provided with at least 70% by weight of cellulose, more preferably with at least 80% by weight of cellulose, still more preferably with at least 90% by weight of cellulose, while possibly the other sheet for the rest is made of a plastic, preferably of said plastic and/or that the other sheet comprises less than 30% of plastic polymers.

14. A pad (1) according to any one of the preceding claims, **characterized in that** the other sheet is of flexible design, or
is of form-retaining design and is preferably made of a same material as the at least one sheet, more particularly that the other sheet and the at least one sheet are made from a same sheet or same kind of sheets.

15. A pad (1) according to any one of the preceding claims, **characterized in that** the part of the second sheet (2B) that is within the contours of the sealing seam (10) is of dish-shaped design while in particular the first sheet (2A) is of flat design.

16. A system provided with a pad (1) according to any one of the preceding claims and a coffee-maker, wherein the coffee-maker is provided with a holder for receiving the pad (1), a cover for closing off the holder, and fluid means for generating a fluid flow under pressure, wherein the holder is provided with at least one beverage outflow opening and the cover is provided with at least one fluid inflow opening which are in fluid communication with the fluid means for supplying the fluid flow to the fluid openings so that the fluid is supplied under pressure to the first sheet (2A) of the pad (1) so that the fluid is pressed through the pad (1) for the preparation of the beverage in the pad (1), the beverage leaving the pad (1) via the second sheet (2B) to proceed to leave the holder via the at least one beverage outflow opening.

17. A system according to claim 16, **characterized in that** a fluid sealing is present between the second sheet (2B) and the bottom of the holder, which fluid sealing prevents the fluid which is supplied to the first sheet (2A) of the pad (1) from flowing around the pad (1) to the beverage outflow opening.

18. Use of a pad (1) according to any one of the preceding claims 1-15, wherein the pad (1) is placed in a holder which is provided with at least one beverage outflow opening, the holder with the pad (1) therein is closed off with a cover which is provided with at least one fluid inflow opening, and a fluid is supplied under pressure to the at least one fluid inflow opening so that the fluid is supplied via the first sheet (2A) to the beverage preparation product (6) in the pad (1) for preparing the beverage and wherein the beverage leaves the pad (1) via the second sheet (2B), wherein the beverage proceeds to leave the holder via the at least one beverage outflow opening.

19. Use according to claim 18, **characterized in that** a fluid sealing is present between the second sheet (2B) and the bottom of the holder, which fluid sealing prevents the fluid which is supplied to the first sheet (2A) of the pad (1) from flowing around the pad (1) to the beverage outflow opening.

20. A method for preparing a beverage with a pad (1) according to any one of the preceding claims 1-15, wherein the pad (1) is placed in a holder (16) which is provided with at least one beverage outflow opening (44), the holder with the pad (1) therein is closed off with a cover (18) which is provided with at least one fluid inflow opening (32), and a fluid is supplied under pressure to the at least one fluid opening so that the fluid is supplied via the first sheet (2A) to the beverage preparation product (6) in the pad (1) for preparing the beverage and wherein the beverage leaves the pad (1) via the second sheet (2B), wherein the beverage proceeds to leave the holder via the at least one beverage outflow opening (44).

21. A method according to claim 20, **characterized in that** a fluid sealing is present between the second sheet (2B) and the bottom of the holder, which fluid sealing prevents the fluid which is supplied to the first sheet (2A) of the pad (1) from flowing around the pad (1) to the beverage outflow opening.

22. A method for making a pad (1) according to any one of the preceding claims 1-15, wherein
in step a. a set-up of a third sheet (60), fourth sheet (50) and the beverage preparation product (6) is made, with the beverage preparation product (6) situated between the third sheet (60) and the fourth sheet (50), and then in step b. the third sheet (60) and the fourth sheet (50) are joined together, thereby forming the sealing seam (10) so that the beverage preparation product (6) is included in the inner space (4), wherein the third sheet (60) is made of the same material as the first sheet (2A) and wherein the fourth sheet (50) is made of the same material as the second sheet (2B),
**characterized in that**
the fourth sheet (50) is heated in a step c. and then is cooled in a step d. for increasing the bending stiffness of the fourth sheet (50), and wherein at least one sheet is made according to any one of the claims 1-15.

23. A method according to claim 22, **characterized in that** the fourth sheet (50) is heated in step c. to a temperature of 200-400 degrees Celsius, especially to a temperature of 90-200 degrees Celsius, in particular when the second sheet (2B) is made of PLA.

24. A method according to any one of claims 22 or 23, **characterized in that** in a step e. the fourth sheet (50) is placed in a mold so that the fourth sheet (50) obtains a predetermined shape.

25. A method according to claim 24, **characterized in that** the beverage preparation product (6) in a step f. is placed on the fourth sheet (50), preferably while the fourth sheet (50) is already in the mold, and that step b. is carried out after step f.

26. A method according to any one of the preceding claims 22 - 25, **characterized in that** the third sheet (60) and/or the fourth sheet (50) during the carrying out of step b. is heated to 90-400 degrees Celsius, in particular 90-200 degrees Celsius.

27. A method according to any one of the preceding claims 22 - 26, **characterized in that** the fourth sheet (50) and possibly the third sheet (60) is cooled after carrying out step b.

## Patentansprüche

1. Formstabiles Pad (1) zur Verwendung in einer Kaffeemaschine zum Zubereiten von 1 oder 2 Tassen eines Getränks, bereitgestellt mit einer Hülle (2A, 2B) mit einem Innenraum (4), welcher mit einem Getränkezubereitungsprodukt (6) gefüllt ist, wobei das Getränkezubereitungsprodukt (6) ein mit einem Fluid zu extrahierendes Produkt (und/oder ein in einem Fluid lösliches Produkt) umfasst, wobei die Hülle (2A, 2B) durch mindestens ein erstes Flächengebilde (2A) und ein zweites Flächengebilde (2B) gebildet wird, welche benachbart entlang ihrer Längsränder (8) miteinander verbunden sind, wobei die miteinander verbundenen Teile des ersten Flächengebildes (2A) und des zweiten Flächengebildes (2B) eine Siegelnaht (10) bilden, und wobei das erste Flächengebilde (2A) und das zweite Flächengebilde (2B) jeweils einen Filter bilden, welcher ein Fluid durchleiten kann, und welcher eine Barriere zu dem Getränkezubereitungsprodukt bildet, wobei, bei Verwendung mit der Kaffeemaschine, dem Pad (1) ein Fluid wie Wasser unter Druck bereitgestellt wird, sodass das Fluid zum Erhalten des Getränks durch das Pad (1) gepresst wird, welches daraufhin das Pad (1) verlässt, und wobei jedes Flächengebilde mindestens eine Schicht umfasst,
**dadurch gekennzeichnet, dass**
mindestens eines von dem ersten Flächengebilde (2A) und dem zweiten Flächengebilde (2B) von formstabilem Design ist, hergestellt aus:
mindestens einer Basisverbindung, umfassend schmelzbare Polymere und vorzugsweise Fasern und/oder Fäden derselben, und
mindestens eine Verstärkungsverbindung, umfassend mindestens nicht schmelzbare Fasern und/oder Fäden aus der Gruppe von Abaca, Bananenpflanze, Flachs, Hanf, Kenaf, Nesseln, Ramie, Bambus, Bogenhanf, indianischem Hanf, Jute, Baumwolle, Kokosfaser, Sisal, Agave, Lyocell, Tencel.

2. Pad (1) nach Anspruch 1, **dadurch gekennzeichnet, dass**
das mindestens eine Flächengebilde (2A, 2B) mindestens eine Schicht umfasst, umfassend eine vorzugsweise homogene Mischung aus der mindestens einen Basisverbindung und der mindestens einen Verstärkungsverbindung, oder
dadurch, dass das mindestens eine Flächengebilde (2A, 2B) mindestens eine erste Schicht (5) umfasst, umfassend mindestens eine Basisverbindung ohne eine Verstärkungsverbindung und mindestens eine zweite Schicht (7), umfassend mindestens eine Verstärkungsverbindung, wobei die mindestens eine zweite Schicht (7) wahlweise ebenfalls mindestens eine Basisverbindung umfasst, und wobei die mindestens eine zweite Schicht (7) aufgetragen und vorzugsweise mit der mindestens einen ersten Schicht (5) verbunden wird, oder umgekehrt.

3. Pad (1) nach einem der vorstehenden Ansprüche, **dadurch gekennzeichnet, dass** die mindestens eine Basisverbindung ein thermoplastisches Material umfasst.

4. Pad (1) nach einem der vorstehenden Ansprüche, **dadurch gekennzeichnet, dass** die mindestens eine Basisverbindung einen Kunststoff umfasst, wobei dieser Kunststoff mindestens teilweise in der Form von Fasern und/oder Fäden und insbesondere in der Form von Cellulosefasern und/oder Cellulosefäden vorliegt, welche mit einer Kunststoffbeschichtung bereitgestellt werden, und/oder
dadurch, dass die Verstärkungsverbindung in Form von Fasern und/oder Fäden bereitgestellt wird, welche mit einer Kunststoffbeschichtung bereitgestellt werden.

5. Pad (1) nach einem der vorstehenden Ansprüche und insbesondere Anspruch 4, **dadurch gekennzeichnet, dass** der Kunststoff aus Kunststoffpolymeren besteht oder Kunststoffpolymere umfasst, wobei die Kunststoffpolymere vorzugsweise PE, PET, PETP, coPET, LLDPE, CPP, PLA und/oder PP umfassen.

6. Pad (1) nach einem der vorstehenden Ansprüche, insbesondere einem der Ansprüche 4 oder 5, **dadurch gekennzeichnet, dass** das mindestens eine Flächengebilde aus einem Vliesmaterial hergestellt ist und insbesondere den Kunststoff und/oder den Kunststoff und mindestens eine Verstärkungsverbindung umfasst.

7. Pad (1) nach einem der vorstehenden Ansprüche, **dadurch gekennzeichnet, dass** die Basisverbindung ebenfalls Cellulosefasern und/oder Cellulosefäden umfasst und/oder Kunststoffpolymere umfasst, vorzugsweise gewählt aus der Gruppe PE, PET, PETP, coPET, LLDPE, CPP, PLA und/oder PP, wobei die Kunststoffpolymere bis zu einer Temperatur von 170 °Celsius, vorzugsweise 200 °Celsius und mehr bevorzugt 250 °Celsius, nicht schmelzbar sind.

8. Pad (1) nach einem der vorstehenden Ansprüche, **dadurch gekennzeichnet, dass** das mindestens eine Flächengebilde mittels einer Wärmebehandlung und insbesondere mittels Kalandrieren formstabiler gemacht wird.

9. Pad (1) nach einem der vorstehenden Ansprüche, **dadurch gekennzeichnet, dass** das mindestens eine Flächengebilde eine erste Schicht (5), die im Wesentlichen aus PETP besteht, und eine zweite Schicht (7), die im Wesentlichen aus CPP besteht, umfasst, wobei mindestens eine der ersten oder der zweiten Schicht (7) und/oder mindestens eine dritte Schicht die Verstärkungsverbindung umfasst.

10. Pad (1) nach einem der vorstehenden Ansprüche, **dadurch gekennzeichnet, dass** die Basisverbindung Polymilchsäurefasern (PLA-Fasern) umfasst.

11. Pad (1) nach einem der vorstehenden Ansprüche und insbesondere Anspruch 10, **dadurch gekennzeichnet, dass** das mindestens eine Flächengebilde < 100 % Polymilchsäurefasern (PLA-Fasern) und möglicherweise Derivate und für den Rest die Verstärkungsverbindung oder mindestens die Verstärkungsverbindung und mindestens eine Basisverbindung umfasst, sodass das zweite Flächengebilde (2B) nach Verwendung mindestens im Wesentlichen vollständig biologisch abbaubar ist.

12. Pad (1) nach einem der vorstehenden Ansprüche und insbesondere einem der Ansprüche 10 oder 11, **dadurch gekennzeichnet, dass** das mindestens eine Flächengebilde zu x % aus Polymilchsäurefasern (PLA-Fasern) und zu (1-x) % aus Papier und/oder mindestens einer Verstärkungsverbindung besteht, wobei x im Bereich von 50-80, vorzugsweise im Bereich von 60-70, mehr bevorzugt annähernd gleich 65 liegt, während insbesondere die PLA-Fasern einen Schmelzpunkt von 105-165 Grad Celsius aufweisen.

13. Pad (1) nach einem der vorstehenden Ansprüche, **dadurch gekennzeichnet, dass** das andere Flächengebilde vorzugsweise mit Cellulosefasern bereitgestellt wird, und/oder dadurch, dass das erste Flächengebilde (2A) mindestens mit 70 Gew.-% Cellulose, mehr bevorzugt mindestens mit 80 Gew.-% Cellulose, noch mehr bevorzugt mindestens mit 90 Gew.-% Cellulose bereitgestellt wird, während das andere Flächengebilde für den Rest möglicherweise aus einem Kunststoff hergestellt ist, vorzugsweise aus dem Kunststoff, und/oder dass das andere Flächengebilde weniger als 30 % Kunststoffpolymere umfasst.

14. Pad (1) nach einem der vorstehenden Ansprüche, **dadurch gekennzeichnet, dass** das andere Flächengebilde von flexiblem Design ist, oder
von formstabilem Design ist und vorzugsweise aus einem gleichen Material hergestellt ist wie das mindestens eine Flächengebilde, ganz besonders, dass das andere Flächengebilde und das mindestens eine Flächengebilde aus einem gleichen Flächengebilde oder einer gleichen Art von Flächengebilde hergestellt sind.

15. Pad (1) nach einem der vorstehenden Ansprüche, **dadurch gekennzeichnet, dass** der Teil des zweiten Flächengebildes (2B), der sich innerhalb der Konturen der Siegelnaht (10) befindet, von schüsselförmigem Design ist, während insbesondere das erste Flächengebilde (2A) von flachem Design ist.

16. Mit einem Pad (1) bereitgestelltes System nach einem der vorstehenden Ansprüche und eine Kaffeemaschine, wobei die Kaffeemaschine mit einem Halter zum Aufnehmen des Pads (1), einem Deckel zum Schließen des Halters, und Fluidmitteln zum Erzeugen eines Fluidflusses unter Druck bereitgestellt ist, wobei der Halter mit mindestens einer Getränkeausflussöffnung bereitgestellt ist und der Deckel mit mindestens einer Fluideinflussöffnung bereitgestellt ist, welche in Fluidkommunikation mit den Fluidmitteln zum Liefern des Fluidflusses zu den Fluidöffnungen stehen, sodass das Fluid unter Druck zu dem ersten Flächengebilde (2A) des Pads (1) geliefert wird, sodass das Fluid zum Zubereiten des Getränks in dem Pad (1) durch das Pad (1) gepresst wird, das Getränk das Pad (1) durch das zweite Flächengebilde (2B) verlässt, um damit fortzufahren, den Halter durch die mindestens eine Getränkeausflussöffnung zu verlassen.

17. System nach Anspruch 16, **dadurch gekennzeichnet, dass** eine Fluiddichtung zwischen dem zweiten Flächengebilde (2B) und dem Boden des Halters vorhanden ist, wobei die Fluiddichtung das Fluid, welches an das erste Flächengebilde (2A) des Pads (1) geliefert wird, daran hindert, um das Pad (1) herum zu der Getränkeausflussöffnung zu fließen.

18. Verwendung eines Pads (1) nach einem der vorstehenden Ansprüche 1-15, wobei das Pad (1) in einen Halter platziert wird, welcher mit mindestens einer Getränkeausflussöffnung bereitgestellt ist, der Halter mit dem Pad (1) darin mit einem Deckel, welcher mit mindestens einer Fluideinflussöffnung bereitgestellt ist, geschlossen wird, und ein Fluid unter Druck an die mindestens eine Fluideinflussöffnung geliefert wird, sodass das Fluid durch das erste Flächengebilde (2A) an das Getränkezubereitungsprodukt (6) in dem Pad (1) zum Zubereiten des Getränks geliefert wird, und wobei das Getränk das Pad (1) durch das zweite Flächengebilde (2B) verlässt, wobei das Getränk damit fortfährt, den Halter durch die mindestens eine Getränkeausflussöffnung zu verlassen.

19. Verwendung nach Anspruch 18, **dadurch gekennzeichnet, dass** eine Fluiddichtung zwischen dem zweiten Flächengebilde (2B) und dem Boden des Halters vorhanden ist, wobei die Fluiddichtung das Fluid, welches an das erste Flächengebilde (2A) des Pads (1) geliefert wird, daran hindert, um das Pad (1) herum zu der Getränkeausflussöffnung zu fließen.

20. Verfahren zum Zubereiten eines Getränks mit einem Pad (1) nach einem der vorstehenden Ansprüche 1-15, wobei das Pad (1) in einen Halter (16) platziert wird, welcher mit mindestens einer Getränkeausflussöffnung (44) bereitgestellt ist, der Halter mit dem Pad (1) darin mit einem Deckel (18) verschlossen wird, welcher mit mindestens einer Fluideinflussöffnung (32) bereitgestellt ist, und ein Fluid unter Druck der mindestens einen Fluidöffnung bereitgestellt wird, sodass das Fluid durch das erste Flächengebilde (2A) dem Getränkezubereitungsprodukt (6) in dem Pad (1) zum Zubereiten des Getränks bereitgestellt wird, und wobei das Getränk das Pad (1) durch das zweite Flächengebilde (2B) verlässt, wobei das Getränk damit fortfährt, den Halter durch die mindestens eine Getränkeausflussöffnung (44) zu verlassen.

21. Verfahren nach Anspruch 20, **dadurch gekennzeichnet, dass** eine Fluiddichtung zwischen dem zweiten Flächengebilde (2B) und dem Boden des Halters vorhanden ist, wobei die Fluiddichtung das Fluid, welches an das erste Flächengebilde (2A) des Pads (1) geliefert wird, daran hindert, um das Pad (1) herum zu der Getränkeausflussöffnung zu fließen.

22. Verfahren zum Herstellen eines Pads (1) nach einem der vorstehenden Ansprüche 1-15, wobei
in Schritt a. ein Aufbau eines dritten Flächengebildes (60), vierten Flächengebildes (50) und des Getränkezubereitungsprodukts (6) hergestellt wird, wobei sich das Getränkezubereitungsprodukt (6) zwischen dem dritten Flächengebilde (60) und dem vierten Flächengebilde (50) befindet, und anschließend in Schritt b. das dritte Flächengebilde (60) und das vierte Flächengebilde (50) zusammen verbunden werden, dadurch die Siegelnaht (10) bildend, sodass das Getränkezubereitungsprodukt (6) in dem Innenraum (4) eingeschlossen wird, wobei das dritte Flächengebilde (60) aus dem gleichen Material wie das erste Flächengebilde (2A) hergestellt ist, und wobei das vierte Flächengebilde (50) aus dem gleichen Material wie das zweite Flächengebilde (2B) hergestellt ist,
**dadurch gekennzeichnet, dass**
das vierte Flächengebilde (50) zum Vergrößern der Biegesteifigkeit des vierten Flächengebildes (50) in einem Schritt c. erhitzt wird und anschließend in einem Schritt d. gekühlt wird, und wobei das mindestens eine Flächengebilde nach einem der Ansprüche 1-15 hergestellt ist.

23. Verfahren nach Anspruch 22, **dadurch gekennzeichnet, dass** das vierte Flächengebilde (50) in einem Schritt c. auf eine Temperatur von 200-400 Grad Celsius erhitzt wird, insbesondere auf eine Temperatur von 90-200 Grad Celsius, insbesondere wenn das zweite Flächengebilde (2B) aus PLA hergestellt ist.

24. Verfahren nach einem der Ansprüche 22 oder 23, **dadurch gekennzeichnet, dass** in einem Schritt e. das vierte Flächengebilde (50) in eine Form platziert wird, sodass das vierte Flächengebilde (50) eine vorbestimmte Gestalt erhält.

25. Verfahren nach Anspruch 24, **dadurch gekennzeichnet, dass** das Getränkezubereitungsprodukt (6) in einem Schritt f. auf das vierte Flächengebilde (50) platziert wird, vorzugsweise während das vierte Flächengebilde (50) sich bereits in der Form befindet, und dadurch, dass Schritt b. nach Schritt f. ausgeführt wird.

26. Verfahren nach einem der vorstehenden Ansprüche 22-25, **dadurch gekennzeichnet, dass** das dritte Flächengebilde (60) und/oder das vierte Flächengebilde (50) während des Ausführens von Schritt b. auf 90-400 Grad Celsius, insbesondere 90-200 Grad Celsius, erhitzt wird.

27. Verfahren nach einem der vorstehenden Ansprüche 22-26, **dadurch gekennzeichnet, dass** das vierte Flächengebilde (50) und möglicherweise das dritte Flächengebilde (60) nach Ausführen von Schritt b. gekühlt wird.

## Revendications

1. Dosette à conservation de forme (1) pour une utilisation dans une machine à café pour la préparation de 1 ou 2 tasses de boisson, pourvue d'une enveloppe (2A, 2B) avec un espace intérieur (4) qui est rempli d'un produit de préparation de boisson (6) pour préparer la boisson, dans laquelle le produit de préparation de boisson (6) comprend un produit à extraire avec un fluide (et/ou un produit soluble dans un fluide), dans laquelle l'enveloppe (2A, 2B) est formée d'au moins une première feuille (2A) et d'une deuxième feuille (2B) qui sont interconnectées de façon adjacente à leurs bords longitudinaux (8), dans laquelle les parties interconnectées de la première feuille (2A) et de la deuxième feuille (2B) forment un joint de scellage (10) et dans laquelle la première feuille (2A) et la deuxième feuille (2B) forment chacune un filtre qui peut faire passer un fluide et qui forme une barrière au produit de préparation de boisson, dans laquelle, en cours d'utilisation, avec la machine à café, un fluide tel que de l'eau est fourni, sous pression, à la dosette (1) de sorte que le fluide soit pressé à travers la dosette (1) pour obtenir la boisson qui, ensuite, quitte la dosette (1) et dans laquelle chaque feuille comprend au moins une couche,
**caractérisée en ce que**
au moins une de la première feuille (2A) et de la deuxième feuille (2B) est d'une conception à conservation de forme, constituée de :
au moins un composé de base comprenant des polymères fusibles et, de préférence, des fibres et/ou filaments de ceux-ci et
au moins un composé de renfort comprenant au moins des fibres et/ou filaments non fusibles du groupe constitué par abaca, bananier, lin, chanvre, ambre jaune, orties, ramie, bambou, corde d'arc, chanvre indien, jute, coton, fibre de coco, sisal, agave, lyocell, tencel.

2. Dosette (1) selon la revendication 1, **caractérisée en ce que**
ladite au moins une feuille (2A, 2B) comprend au moins une couche comprenant un mélange de préférence homogène dudit au moins un composé de base et dudit au moins un composé de renfort ou
**en ce que** ladite au moins une feuille (2A, 2B) comprend au moins une première couche (5) comprenant au moins un composé de base dépourvu de composé de renfort et au moins une deuxième couche (7) comprenant au moins un composé de renfort, dans laquelle ladite au moins une deuxième couche (7) comprend aussi éventuellement au moins un composé de base et dans laquelle ladite au moins une deuxième couche (7) est appliquée et de préférence liée à ladite au moins une première couche (5) ou inversement.

3. Dosette (1) selon l'une quelconque des revendications précédentes, **caractérisée en ce que** ledit au moins un composé de base comprend un matériau thermoplastique.

4. Dosette (1) selon l'une quelconque des revendications précédentes, **caractérisée en ce que** ledit au moins un composé de base comprend un plastique, dans laquelle ce plastique est présent au moins partiellement sous la forme de fibres et/ou de filaments et spécialement sous la forme de fibres de cellulose et/ou de filaments de cellulose qui sont pourvus d'un revêtement plastique et/ou
**en ce que** le composé de renfort se présente sous la forme de fibres et/ou de filaments qui sont pourvus d'un revêtement plastique.

5. Dosette (1) selon l'une quelconque des revendications précédentes et spécialement la revendication 4, **caractérisée en ce que** le plastique est constitué de polymères plastiques ou comprend des polymères plastiques, dans laquelle, de préférence, les polymères plastiques comprennent PE, PET, PETP, coPET, LLDPE, CPP, PLA et/ou PP.

6. Dosette (1) selon l'une quelconque des revendications précédentes, spécialement l'une quelconque des revendications 4 ou 5, **caractérisée en ce que** ladite au moins une feuille est constituée d'un matériau non tissé et comprend spécialement ledit plastique et/ou ledit plastique et au moins un composé de renfort.

7. Dosette (1) selon l'une quelconque des revendications précédentes, **caractérisée en ce que** le composé de base comprend également des fibres de cellulose et/ou des filaments de cellulose et/ou comprend des polymères plastiques choisis de préférence parmi le groupe PE, PET, PETP, coPET, LLDPE, CPP, PLA et/ou PP, dans laquelle les polymères plastiques sont non fusibles jusqu'à une température de 170 °Celsius, de préférence 200 °Celsius et plus préférablement 250 °Celsius.

8. Dosette (1) selon l'une quelconque des revendications précédentes, **caractérisée en ce que** la conservation de forme de ladite au moins une feuille est augmentée au moyen d'un traitement thermique et spécialement au moyen d'un calandrage.

9. Dosette (1) selon l'une quelconque des revendications précédentes, **caractérisée en ce que** ladite au moins une feuille comprend une première couche (5) constituée au moins essentiellement de PETP et une deuxième couche (7) constituée au moins essentiellement de CPP, dans laquelle au moins l'une de la première ou de la deuxième couche (7) et/ou au moins une troisième couche comprennent le composé de renfort.

10. Dosette (1) selon l'une quelconque des revendications précédentes, **caractérisée en ce que** le composé de base comprend des fibres d'acide polylactique (PLA).

11. Dosette (1) selon l'une quelconque des revendications précédentes et spécialement la revendication 10, **caractérisée en ce que** ladite au moins une feuille comprend <100 % de fibres d'acide polylactique (PLA) et éventuellement des dérivés et, pour le reste, le composé de renfort ou au moins le composé de renfort et au moins un composé de base, de sorte que la deuxième feuille (2B) soit biodégradable de manière au moins essentiellement complète après utilisation.

12. Dosette (1) selon l'une quelconque des revendications précédentes et spécialement l'une quelconque des revendications 10 ou 11, **caractérisée en ce que** ladite au moins une feuille est constituée pour x % de fibres d'acide polylactique (PLA) et pour (1-x) % de papier et/ou d'au moins un composé de renfort, x étant dans la plage de 50 à 80, de préférence dans la plage de 60 à 70, plus préférablement à peu près égal à 65, alors que, en particulier, les fibres de PLA ont un point de fusion de 105 à 165 degrés Celsius.

13. Dosette (1) selon l'une quelconque des revendications précédentes, **caractérisée en ce que** l'autre feuille est de préférence pourvue de fibres de cellulose et/ou **en ce que** la première feuille (2A) est pourvue d'au moins 70 % en poids de cellulose, plus préférablement d'au moins 80 % en poids de cellulose, encore plus préférablement d'au moins 90 % en poids de cellulose, alors qu'éventuellement, l'autre feuille, pour le reste, est constituée d'un plastique, de préférence dudit plastique et/ou **en ce que** l'autre feuille comprend moins de 30 % de polymères plastiques.

14. Dosette (1) selon l'une quelconque des revendications précédentes, **caractérisée en ce que** l'autre feuille est de conception flexible ou
est de conception à conservation de forme et est de préférence constituée d'un même matériau que ladite au moins une feuille, plus particulièrement **en ce que** l'autre feuille et ladite au moins une feuille sont fabriquées à partir d'une même feuille ou d'un même type de feuilles.

15. Dosette (1) selon l'une quelconque des revendications précédentes, **caractérisée en ce que** la partie de la deuxième feuille (2B) qui se trouve à l'intérieur des contours du joint de scellage (10) est de conception en forme de cuvette alors que, en particulier, la première feuille (2A) est de conception plate.

16. Système pourvu d'une dosette (1) selon l'une quelconque des revendications précédentes et d'une machine à café, dans lequel la machine à café est pourvue d'un support destiné à recevoir la dosette (1), d'un couvercle destiné à fermer le support et d'un moyen de fluide destiné à générer un écoulement de fluide sous pression, dans lequel le support est pourvu d'au moins une ouverture d'écoulement de boisson et le couvercle est pourvu d'au moins une ouverture d'arrivée de fluide qui est en communication fluidique avec le moyen de fluide pour fournir l'écoulement de fluide aux ouvertures de fluide, de sorte que le fluide soit fourni sous pression à la première feuille (2A) de la dosette (1) de sorte que le fluide soit pressé à travers la dosette (1) pour la préparation de la boisson dans la dosette (1), la boisson quittant la dosette (1) par l'intermédiaire de la deuxième feuille (2B) pour en arriver à quitter le support par l'intermédiaire de ladite au moins une ouverture d'écoulement de boisson.

17. Système selon la revendication 16, **caractérisé en ce qu'**une étanchéité aux fluides est présente entre la deuxième feuille (2B) et le fond du support, laquelle étanchéité aux fluides empêche le fluide qui est fourni à la première feuille (2A) de la dosette (1) de s'écouler autour de la dosette (1) vers l'ouverture d'écoulement de boisson.

18. Utilisation d'une dosette (1) selon l'une quelconque des revendications 1 à 15 précédentes, dans laquelle la dosette (1) est placée dans un support qui est pourvu d'au moins une ouverture d'écoulement de boisson, le support avec la dosette (1) en son sein est fermé avec un couvercle qui est pourvu d'au moins une ouverture d'arrivée de fluide et un fluide est fourni sous pression à ladite au moins une ouverture d'arrivée de fluide de sorte que le fluide soit fourni par l'intermédiaire de la première feuille (2A) au produit de préparation de boisson (6) dans la dosette (1) pour préparer la boisson et dans laquelle la boisson quitte la dosette (1) par l'intermédiaire de la deuxième feuille (2B), dans laquelle la boisson en arrive à quitter le support par l'intermédiaire de ladite au moins une ouverture d'écoulement de boisson.

19. Utilisation selon la revendication 18, **caractérisée en ce qu'**une étanchéité aux fluides est présente entre la deuxième feuille (2B) et le fond du support, laquelle étanchéité aux fluides empêche le fluide qui est fourni à la première feuille (2A) de la dosette (1) de s'écouler autour de la dosette (1) vers l'ouverture d'écoulement de boisson.

20. Procédé de préparation d'une boisson avec une dosette (1) selon l'une quelconque des revendications 1 à 15 précédentes, dans lequel la dosette (1) est placée dans un support (16) qui est pourvu d'au moins une ouverture d'écoulement de boisson (44), le support avec la dosette (1) en son sein est fermé avec un couvercle (18) qui est pourvu d'au moins une ouverture d'arrivée de fluide (32) et un fluide est fourni sous pression à ladite au moins une ouverture de fluide de sorte que le fluide soit fourni par l'intermédiaire de la première feuille (2A) au produit de préparation de boisson (6) dans la dosette (1) pour préparer la boisson et dans lequel la boisson quitte la dosette (1) par l'intermédiaire de la deuxième feuille (2B), dans lequel la boisson en arrive à quitter le support par l'intermédiaire de ladite au moins une ouverture d'écoulement de boisson (44).

21. Procédé selon la revendication 20, **caractérisé en ce qu'**une étanchéité aux fluides est présente entre la deuxième feuille (2B) et le fond du support, laquelle étanchéité aux fluides empêche le fluide qui est fourni à la première feuille (2A) de la dosette (1) de s'écouler autour de la dosette (1) vers l'ouverture d'écoulement de boisson.

22. Procédé de fabrication d'une dosette (1) selon l'une quelconque des revendications 1 à 15 précédentes, dans lequel
à l'étape a., une mise en place d'une troisième feuille (60), d'une quatrième feuille (50) et du produit de préparation de boisson (6) est faite, avec le produit de préparation de boisson (6) situé entre la troisième feuille (60) et la quatrième feuille (50), puis à l'étape b., la troisième feuille (60) et la quatrième feuille (50) sont réunies, en formant de ce fait le joint de scellage (10) de sorte que le produit de préparation de boisson (6) soit inclus dans l'espace intérieur (4), dans lequel la troisième feuille (60) est constituée du même matériau que la première feuille (2A) et dans lequel la quatrième feuille (50) est constituée du même matériau que la deuxième feuille (2B),
**caractérisé en ce que**
la quatrième feuille (50) est chauffée dans une étape c. puis est refroidie dans une étape d. pour augmenter la rigidité à la flexion de la quatrième feuille (50) et dans lequel au moins une feuille est fabriquée selon l'une quelconque des revendications 1 à 15.

23. Procédé selon la revendication 22, **caractérisé en ce que** la quatrième feuille (50) est chauffée à l'étape c. à une température de 200 à 400 degrés Celsius, spécialement à une température de 90 à 200 degrés Celsius, en particulier lorsque la deuxième feuille (2B) est constituée de PLA.

24. Procédé selon l'une quelconque des revendications 22 ou 23, **caractérisé en ce que** dans une étape e., la quatrième feuille (50) est placée dans un moule de sorte que la quatrième feuille (50) obtienne une forme prédéterminée.

25. Procédé selon la revendication 24, **caractérisé en ce que** le produit de préparation de boisson (6), dans une étape f., est placé sur la quatrième feuille (50), de préférence alors que la quatrième feuille (50) est déjà dans le moule et **en ce que** l'étape b. est effectuée après l'étape f.

26. Procédé selon l'une quelconque des revendications 22 à 25 précédentes, **caractérisé en ce que** la troisième feuille (60) et/ou la quatrième feuille (50) pendant la réalisation de l'étape b. sont chauffées à une température de 90 à 400 degrés Celsius, en particulier 90 à 200 degrés Celsius.

27. Procédé selon l'une quelconque des revendications précédentes 22 à 26, **caractérisé en ce que** la quatrième feuille (50) et éventuellement la troisième feuille (60) sont refroidies après la réalisation de l'étape b.
